(19) Europäisches Patentamt
European Patent Office
Office européen des brevets

(11) **EP 4 258 123 A1**

(12) **EUROPEAN PATENT APPLICATION**
published in accordance with Art. 153(4) EPC

(43) Date of publication:
**11.10.2023  Bulletin 2023/41**

(21) Application number: **21920840.2**

(22) Date of filing: **21.12.2021**

(51) International Patent Classification (IPC):
**G06F 13/38** (2006.01)

(52) Cooperative Patent Classification (CPC):
**G06F 13/38; G06F 13/40**

(86) International application number:
**PCT/CN2021/140043**

(87) International publication number:
**WO 2022/156466 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **20.01.2021   CN 202110075796**

(71) Applicant: **Huawei Technologies Co., Ltd.
Longgang District
Shenzhen, Guangdong 518129 (CN)**

(72) Inventors:
• **CHANG, Ming
Shenzhen, Guangdong 518129 (CN)**

• **FAN, Maobin
Shenzhen, Guangdong 518129 (CN)**
• **LI, Yongyao
Shenzhen, Guangdong 518129 (CN)**
• **YUE, Peiyu
Shenzhen, Guangdong 518129 (CN)**
• **WANG, Liang
Shenzhen, Guangdong 518129 (CN)**
• **WAN, Jie
Shenzhen, Guangdong 518129 (CN)**

(74) Representative: **MERH-IP Matias Erny Reichl Hoffmann
Patentanwälte PartG mbB
Paul-Heyse-Strasse 29
80336 München (DE)**

(54) **COMMUNICATION CIRCUIT AND ELECTRONIC DEVICE**

(57)    A communication circuit and an electronic device are provided. The communication circuit includes a sending apparatus, a communication line, and a receiving apparatus. The sending apparatus is connected to the receiving apparatus through the communication line. A first power supply management unit is coupled to a first direct current maintaining unit, and the first direct current maintaining unit is coupled to a first end of the communication line. A second power supply management unit is coupled to a second direct current maintaining unit, and the second direct current maintaining unit is coupled to a second end of the communication line. The first power supply management unit controls the first direct current maintaining unit to be powered on, and controls the first direct current maintaining unit to maintain a power-on state. The first direct current maintaining unit maintains a direct current voltage at the first end of the communication line as a first preset voltage. The second power supply management unit controls the second direct current maintaining unit to be powered on, and controls the second direct current maintaining unit to maintain a power-on state. The second direct current maintaining unit maintains a direct current voltage at the second end of the communication line as a second preset voltage.

FIG. 4

**Description**

**TECHNICAL FIELD**

This application relates to the field of communication technologies, and in particular, to a communication circuit and an electronic device.

**BACKGROUND**

With rapid development of science and technology, a quantity of chips on a board is increasing, and an interconnection architecture for fast communication is formed between the chips. Generally, a plurality of chips are coupled to each other by using an interface switching chip or an interface field programmable gate array. A serializer/deserializer (serializer/deserializer, SerDes for short) is configured to implement data transmission between a sending end and a receiving end. The serializer/deserializer is widely applied to high-speed communication between the chips because the serializer/deserializer has advantages such as high transmission bandwidth and a small quantity of signals. In a line implementation, a SerDes interface includes an alternating current (alternating current, AC) coupling manner and a direct current (direct current, DC) coupling manner. In the AC coupling manner, a coupling capacitor needs to be connected to isolate a direct current component between a sending chip and a receiving chip.

To reduce power, a conventional SerDes interface usually disables a sending module and a receiving module during a data transmission interval, and the SerDes interface enters a low-power mode. When the SerDes interface is in the low-power mode, an output of the sending module is a low level. When the SerDes interface exits the low-power mode (that is, is woken up), the output of the sending module can be quickly set up to an expected working level. When the SerDes interface uses the AC coupling manner, due to existence of the coupling capacitor, when the SerDes interface is woken up, the SerDes interface needs to charge the capacitor first, and the receiving module cannot quickly reach an expected working level. As a result, the SerDes interface exits the low-power mode for a long time, and the receiving module cannot receive data before reaching the expected working level, resulting in low data transmission efficiency.

**SUMMARY**

This application provides a communication circuit and an electronic device, to improve data transmission efficiency.

According to a first aspect, this application provides a communication circuit, including a sending apparatus, a communication line, and a receiving apparatus. The sending apparatus is connected to the receiving apparatus through the communication line. The communication line is configured to transmit data between the sending apparatus and the receiving apparatus. A coupling capacitor is disposed on the communication line. The sending apparatus includes a first power supply management unit and a first direct current maintaining unit. The first power supply management unit is coupled to the first direct current maintaining unit. The first direct current maintaining unit is coupled to a first end of the communication line. The receiving apparatus includes a second power supply management unit and a second direct current maintaining unit. The second power supply management unit is coupled to the second direct current maintaining unit. The second direct current maintaining unit is coupled to a second end of the communication line.

The first power supply management unit is configured to: control the first direct current maintaining unit to be powered on, and control the first direct current maintaining unit to maintain a power-on state.

The first direct current maintaining unit is configured to maintain a direct current voltage at the first end of the communication line as a first preset voltage.

The second power supply management unit is configured to: control the second direct current maintaining unit to be powered on, and control the second direct current maintaining unit to maintain a power-on state.

The second direct current maintaining unit is configured to maintain a direct current voltage at the second end of the communication line as a second preset voltage.

The first direct current maintaining unit maintains the direct current voltage at the first end of the communication line as the first preset voltage, and the second direct current maintaining unit maintains the direct current voltage at the second end of the communication line as the second preset voltage. In this way, the direct current voltages at the two ends of the communication line can be respectively maintained as the first preset voltage and the second preset voltage. When the communication circuit exits a low-power mode and sends the data, the capacitor on the communication line does not need to be charged. As a result, the communication circuit exits the low-power mode for a shorter time. This improves data transmission efficiency of the communication circuit.

In a possible design, the coupling capacitor disposed on the communication line includes a first capacitor and a second capacitor. The communication line includes a first signal cable and a second signal cable. The first capacitor is disposed on the first signal cable. The second capacitor is disposed on the second signal cable. The first direct current maintaining unit includes a first resistor, a second resistor, a third resistor, a fourth resistor, and a second power supply. A first end of the first resistor is separately coupled to a first end of the third resistor and a first end of the first signal cable. A second end of the first resistor is coupled to the second power supply. A second end of the third resistor is grounded. A first end of the second resistor is separately coupled to a first end of the fourth resistor and a first end of the second signal cable. A second end of the second resistor is coupled to the second power supply. A second end of the fourth resistor is grounded.

Herein,

$$0.95 \leq \frac{r3*(r2+r4)}{r4*(r1+r3)} \leq 1.05$$

, where r1 is a resistance value of the first resistor, r2 is a resistance value of the second resistor, r3 is a resistance value of the third resistor, and r4 is a resistance value of the fourth resistor.

The second direct current maintaining unit includes a fifth resistor, a sixth resistor, a seventh resistor, an eighth resistor, and a third power supply. A first end of the fifth resistor is separately coupled to a second end of the first signal cable and a first end of the seventh resistor. A second end of the fifth resistor is coupled to the third power supply. A second end of the seventh resistor is grounded. A first end of the sixth resistor is separately coupled to a second end of the second signal cable and a first end of the eighth resistor. A second end of the sixth resistor is coupled to the third power supply. A second end of the eighth resistor is grounded.

Herein,

$$0.95 \leq \frac{r5*(r6+r8)}{r6*(r5+r7)} \leq 1.05$$

, where r5 is a resistance value of the fifth resistor, r6 is a resistance value of the sixth resistor, r7 is a resistance value of the seventh resistor, and r8 is a resistance value of the eighth resistor.

The first end of the first signal cable and the first end of the second signal cable are used as the first end of the communication line. The second end of the first signal cable and the second end of the second signal cable are used as the second end of the communication line.

In a possible design, the coupling capacitor disposed on the communication line includes a first capacitor and a second capacitor. The first capacitor is disposed on a first signal cable. The second capacitor is disposed on a second signal cable. The communication line includes the first signal cable and the second signal cable. The first direct current maintaining unit includes a first MOS transistor, a second MOS transistor, a third MOS transistor, and a fourth MOS transistor. A source of the first MOS transistor is separately coupled to a drain of the third MOS transistor and a first end of the first signal cable. A drain of the first MOS transistor is coupled to a second power supply. A source of the third MOS transistor is grounded. A source of the second MOS transistor is separately coupled to a drain of the fourth MOS transistor and a first end of the second signal cable. A drain of the second MOS transistor is coupled to the second power supply. A source of the fourth MOS transistor is grounded. A gate of the first MOS transistor, a gate of the second MOS transistor, a gate of the third MOS transistor, and a gate of the fourth MOS transistor are all coupled to the first power supply management unit.

Herein,

$$0.95 \leq \frac{r3'*(r2'+r4')}{r4'*(r1'+r3')} \leq 1.05$$

, where r1' is an equivalent resistance value between the source and the drain of the first MOS transistor, r2' is an equivalent resistance value between the source and the drain of the second MOS transistor, r3' is an equivalent resistance value between the source and the drain of the third MOS transistor, and r4' is an equivalent resistance value between the source and the drain of the fourth MOS transistor.

The second direct current maintaining unit includes a fifth MOS transistor, a sixth MOS transistor, a seventh MOS transistor, and an eighth MOS transistor. A source of the fifth MOS transistor is separately coupled to a drain of the seventh MOS transistor and a second end of the first signal cable. A drain of the fifth MOS transistor is coupled to a third power supply. A source of the seventh MOS transistor is grounded. A source of the sixth MOS transistor is separately coupled to a drain of the eighth MOS transistor and a second end of the second signal cable. A drain of the sixth MOS transistor is coupled to the third power supply. A source of the eighth MOS transistor is grounded. A gate of the fifth MOS transistor, a gate of the sixth MOS transistor, a gate of the seventh MOS transistor, and a gate of the eighth MOS transistor are all coupled to the second power supply management unit.

Herein,

$$0.95 \leq \frac{r5'*(r6'+r8')}{r6'*(r5'+r7')} \leq 1.05$$

, where r5' is an equivalent resistance value between the source and the drain of the fifth MOS transistor, r6' is an equivalent resistance value between the source and the drain of the sixth MOS transistor, r7' is an equivalent resistance value between the source and the drain of the seventh MOS transistor, and r8' is an equivalent resistance value between the source and the drain of the eighth MOS transistor.

The first end of the first signal cable and the first end of the second signal cable are used as the first end of the communication line. The second end of the first signal cable and the second end of the second signal cable are used as the second end of the communication line.

In a possible design, the sending apparatus further includes a first control module and a drive unit. The first control module is coupled to the first power supply management unit. The drive unit is separately coupled to the first control module, the first power supply management unit, and the first end of the communication line.

The first control module is further configured to: receive a data sending request, and transmit a third control signal to the first power supply management unit and transmit parallel data to the drive unit based on the data sending request.

The first power supply management unit is further configured to control, based on the third control signal, the drive unit to be powered on.

The drive unit is configured to: convert the parallel data into serial data, and send the serial data to the communication line.

The first control module is further configured to: receive a sending stop request, and transmit a fifth control signal to the first power supply management unit based on the sending stop request.

The first power supply management unit is further configured to control, based on the fifth control signal, the drive unit to be powered off.

According to the solution provided in this embodiment, when the first control module receives the sending stop request, the first power supply management unit controls the drive unit to be powered off, so that the communication line can enter the low-power mode, to reduce power.

In a possible design, the receiving apparatus further includes a signal detection unit and a receiving unit. The receiving unit is coupled to the second end of the communication line. The signal detection unit is coupled between the second end of the communication line and the receiving unit. The receiving unit and the signal detection unit are further coupled to the second power supply management unit.

The receiving unit is configured to: receive serial data on the communication line, and convert the serial data into parallel data.

The second power supply management unit is further configured to control, based on a second control signal, the signal detection unit to be powered on.

The signal detection unit is configured to detect whether data is transmitted on the communication line. When the signal detection unit detects that the data is transmitted on the communication line, the signal detection unit transmits a fourth control signal to the second power supply management unit.

The second power supply management unit controls, based on the fourth control signal, the receiving unit to be powered on and the receiving unit to maintain a power-on state.

When the signal detection unit detects that no data is transmitted on the communication line, the signal detection unit transmits a sixth control signal to the second power supply management unit. The second power supply management unit controls, based on the sixth control signal, the receiving unit to be powered off.

According to the solution provided in this embodiment, when no data is transmitted on the communication line, the second power supply management unit controls the receiving unit to be powered off, so that the communication line can enter the low-power mode, to reduce power.

According to a second aspect, this application further provides a communication circuit, including a sending apparatus, a communication line, and a receiving apparatus. The sending apparatus is connected to the receiving apparatus through the communication line. The communication line is configured to transmit data between the sending apparatus and the receiving apparatus. A coupling capacitor is disposed on the communication line. The sending apparatus includes a first timing unit, a first power supply management unit, and a first direct current maintaining unit. The first power supply management unit is separately coupled to the first timing unit and the first direct current maintaining unit. The first direct current maintaining unit is coupled to a first end of the communication line. The receiving apparatus includes a second timing unit, a second power supply management unit, and a second direct current maintaining unit. The second power supply management unit is separately coupled to the second timing unit and the second direct current maintaining unit. The second direct current maintaining unit is coupled to a second end of the communication line.

The first timing unit is configured to: generate a power-on time point and a power-off time point, and transmit the power-on time point and the power-off time point to the first power supply management unit.

The first power supply management unit is configured to control, at the power-on time point, the first direct current maintaining unit to be powered on, where a preset time point after the power-on time point is a data sending time point.

The first power supply management unit is further configured to control, at the power-off time point, the first direct current maintaining unit to be powered off.

The first direct current maintaining unit is configured to maintain a direct current voltage at the first end of the communication line as a first preset voltage.

The second timing unit is configured to: generate a power-on time point and a power-off time point, and transmit the power-on time point and the power-off time point to the second power supply management unit.

The second power supply management unit is configured to control, at the power-on time point, the second direct current maintaining unit to be powered on, where a preset time point after the power-on time point is a data sending time point.

The second power supply management unit is further configured to control, at the power-off time point, the second direct current maintaining unit to be powered off.

The second direct current maintaining unit is configured to maintain a direct current voltage at the second end of the communication line as a second preset voltage.

The first timing unit and the second timing unit are disposed. The first timing unit generates the power-on time point and the power-off time point based on a data transmission cycle. The second timing unit generates the power-on time point and the power-off time point based on the data transmission cycle. When a current time point is the power-on time point, the first power supply management unit controls the first direct current maintaining unit to be powered on, and controls the first direct current maintaining unit to maintain a power-on state, and the second power supply management unit controls the second direct current maintaining unit to be powered on, and controls the second direct current maintaining unit to maintain a power-on state. In this way, when the first control module needs to send the data, the direct current voltage at the first end of the communication line can reach the first preset voltage, and the direct current voltage at the second end of the communication line can reach the second preset voltage. When a current time point is the power-off time point, the first power supply management unit controls the first direct current maintaining unit to be powered off, and the second power supply management unit controls the second direct current maintaining unit to be powered off. This can reduce power of the communication circuit.

In a possible design, the coupling capacitor disposed on the communication line includes a first capacitor and a second capacitor. The communication line includes a first signal cable and a second signal cable. The first capacitor is disposed on the first signal cable. The second capacitor is disposed on the second signal cable. The first direct current maintaining unit includes a first resistor, a second resistor, a third resistor, a fourth resistor, and a second power supply. A first end of the first resistor is separately coupled to a first end of the third resistor and a first end of the first signal cable. A second end of the first resistor is coupled to the second power supply. A second end of the third resistor is grounded. A first end of the second resistor is separately coupled to a first end of the fourth resistor and a first end of the second signal cable. A second end of the second resistor is coupled to the second power supply. A second end of the fourth resistor is grounded.

Herein, $0.95 \leq \frac{r3*(r2+r4)}{r4*(r1+r3)} \leq 1.05$, where r1 is a resistance value of the first resistor, r2 is a resistance value of the second resistor, r3 is a resistance value of the third resistor, and r4 is a resistance value of the fourth resistor.

The second direct current maintaining unit includes a fifth resistor, a sixth resistor, a seventh resistor, an eighth resistor, and a third power supply. A first end of the fifth resistor is separately coupled to a second end of the first signal cable and a first end of the seventh resistor. A second end of the fifth resistor is coupled to the third power supply. A second end of the seventh resistor is grounded. A first end of the sixth resistor is separately coupled to a second end of the second signal cable and a first end of the eighth resistor. A second end of the sixth resistor is coupled to the third power supply. A second end of the eighth resistor is grounded.

Herein, $0.95 \leq \frac{r5*(r6+r8)}{r6*(r5+r7)} \leq 1.05$, where r5 is a resistance value of the fifth resistor r6 is a resistance value of the sixth resistor, r7 is a resistance value of the seventh resistor, and r8 is a resistance value of the eighth resistor.

The first end of the first signal cable and the first end of the second signal cable are used as the first end of the communication line. The second end of the first signal cable and the second end of the second signal cable are used as the second end of the communication line.

In a possible design, the coupling capacitor disposed on the communication line includes a first capacitor and a second capacitor. The first capacitor is disposed on a first signal cable. The second capacitor is disposed on a second signal cable. The communication line includes the first signal cable and the second signal cable. The first direct current maintaining unit includes a first MOS transistor, a second MOS transistor, a third MOS transistor, and a fourth MOS transistor. A source of the first MOS transistor is separately coupled to a drain of the third MOS transistor and a first end of the first signal cable. A drain of the first MOS transistor is coupled to a second power supply. A source of the third MOS transistor is grounded. A source of the second MOS transistor is separately coupled to a drain of the fourth MOS transistor and a first end of the second signal cable. A drain of the second MOS transistor is coupled to the second power supply. A source of the fourth MOS transistor is grounded. A gate of the first MOS transistor, a gate of the second MOS transistor, a gate of the third MOS transistor, and a gate of the fourth MOS transistor are all coupled to the first power supply management unit.

Herein, $0.95 \leq \frac{r3'*(r2'+r4')}{r4'*(r1'+r3')} \leq 1.05$, where r1' is an equivalent resistance value between the source and the drain of the first MOS transistor, r2' is an equivalent resistance value between the source and the drain of the second MOS transistor, r3' is an equivalent resistance value between the source and the drain of the third MOS transistor, and r4' is an equivalent resistance value between the source and the drain of the fourth MOS transistor.

The second direct current maintaining unit includes a fifth MOS transistor, a sixth MOS transistor, a seventh MOS transistor, and an eighth MOS transistor. A source of the fifth MOS transistor is separately coupled to a drain of the seventh MOS transistor and a second end of the first signal cable. A drain of the fifth MOS transistor is coupled to a third power supply. A source of the seventh MOS transistor is grounded. A source of the sixth MOS transistor is separately coupled to a drain of the eighth MOS transistor and a second end of the second signal cable. A drain of the sixth MOS transistor is coupled to the third power supply. A source of the eighth MOS transistor is grounded. A gate of the fifth MOS transistor, a gate of the sixth MOS transistor, a gate of the seventh MOS transistor, and a gate of the eighth MOS transistor are all coupled to the second power supply management unit.

$$0.95 \leq \frac{r5'*(r6'+r8')}{r6'*(r5'+r7')} \leq 1.05$$

Herein, , where r5' is an equivalent resistance value between the source and the drain of the fifth MOS transistor, r6' is an equivalent resistance value between the source and the drain of the sixth MOS transistor, r7' is an equivalent resistance value between the source and the drain of the seventh MOS transistor, and r8' is an equivalent resistance value between the source and the drain of the eighth MOS transistor.

The first end of the first signal cable and the first end of the second signal cable are used as the first end of the communication line. The second end of the first signal cable and the second end of the second signal cable are used as the second end of the communication line.

In a possible design, the sending apparatus further includes a first control module and a drive unit. The first control module is separately coupled to the drive unit and the first timing unit. The drive unit is separately coupled to the first power supply management unit and the first end of the communication line.

The first control module is configured to: transmit the data transmission cycle and a link sleep cycle to the first timing unit, and transmit parallel data to the drive unit. The data transmission cycle is transmission duration of each data transmission. The link sleep cycle is a time interval between every two data transmissions.

The first timing unit is configured to determine the power-on time point and the power-off time point based on the data transmission cycle and the link sleep time.

The first power supply management unit is further configured to control, at the preset time point after the power-on time point, the drive unit to be powered on.

The drive unit is configured to: convert the parallel data into serial data, and send the serial data to the communication line.

The first power supply management unit is further configured to control, at the power-off time point, the drive unit to be powered off.

According to the solution provided in this embodiment, when the first control module receives a sending stop request, the first power supply management unit controls the drive unit to be powered off, so that the communication line can enter a low-power mode, to reduce power.

In a possible design, the receiving apparatus further includes a second control module, a signal detection unit, and a receiving unit. The second control module is coupled to the second timing unit. The receiving unit is coupled to the second end of the communication line. The signal detection unit is coupled between the second end of the communication line and the receiving unit. The receiving unit and the signal detection unit are further coupled to the second power supply management unit.

The second control module is configured to: transmit the data transmission cycle and a link sleep cycle to the second timing unit, and transmit parallel data to the receiving unit. The data transmission cycle is transmission duration of each data transmission. The link sleep cycle is a time interval between every two data transmissions.

The second timing unit is configured to determine the power-on time point and the power-off time point based on the data transmission cycle and the link sleep time.

The second power supply management unit is configured to control, at the preset time point after the power-on time point, the signal detection unit and the receiving unit to be powered on.

The signal detection unit is configured to detect whether data is transmitted on the communication line.

The receiving unit is configured to: receive serial data on the communication line, and convert the serial data into parallel data.

The second power supply management unit is configured to control, at the power-off time point, the signal detection unit and the receiving unit to be powered off.

According to the solution provided in this embodiment, when no data is transmitted on the communication line, the second power supply management unit controls the receiving unit to be powered off, so that the communication line can enter a low-power mode, to reduce power.

According to a second aspect, this application provides an electronic device, including the communication circuit according to the first aspect or the second aspect.

## BRIEF DESCRIPTION OF DRAWINGS

To describe the technical solutions in embodiments of the present invention more clearly, the following briefly describes the accompanying drawings for describing embodiments. It is clear that the accompanying drawings in the following descriptions show merely some embodiments of the present invention, and a person of ordinary skill in the art may still derive other drawings from these accompanying drawings without creative efforts.

FIG. 1a and FIG. 1b are schematic diagrams of coupling manners of a communication circuit in the conventional technology;

FIG. 2 is a schematic diagram of data transmission of a communication circuit in the conventional technology;

FIG. 3 is a schematic diagram of switching a working mode of a communication circuit in the conventional technology;

FIG. 4 is a schematic diagram of a principle of a communication circuit according to an embodiment of this application;

FIG. 5 is a schematic diagram of a principle of a communication circuit according to another embodiment of this application;

FIG. 6 is a schematic diagram of a principle of a communication circuit according to another embodiment of this application;

FIG. 7 is a schematic diagram of a principle of a communication circuit according to another embodiment of this application;

FIG. 8 is a schematic diagram of a principle of a communication circuit according to another embodiment of this application;

FIG. 9 is a schematic diagram of a principle of a communication circuit according to another embodiment of this application;

FIG. 10 is a schematic diagram of a structure of a mobile phone according to an embodiment of this application;

FIG. 11 is a schematic diagram of a structure of a mobile phone according to an embodiment of this application;

FIG. 12 is a schematic diagram of a structure of a mobile phone according to another embodiment of this application; and

FIG. 13 is a schematic diagram of a structure of a mobile phone according to another embodiment of this application.

## DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

In descriptions of this application, unless otherwise clearly specified and limited, the terms "first" and "second" are merely intended for a purpose of description, and shall not be understood as an indication or implication of relative importance. Unless otherwise specified or stated, the term "a plurality of" means two or more. The terms "coupling", "fastening", and the like should be understood in a broad sense. For example, "coupling" may be a fixed coupling, a detachable coupling, an integrated coupling, or an electrical connection, or may be a direct connection or an indirect connection by using an intermediate medium. For a person of ordinary skill in the art, specific meanings of the foregoing terms in the present invention may be understood based on a specific situation.

Embodiments of this application provide a communication circuit. The communication circuit may be a SerDes interface. Certainly, the communication circuit in this application may also be applied to another serial-to-parallel conversion circuit, or may also be a circuit in another form. This is not limited in embodiments of this application. The communication circuit may be applied to an electronic device. For example, the electronic device is a tablet computer, a mobile phone, an all-in-one machine, a display, or a desktop computer. In this application, an example in which the communication circuit is applied to a mobile phone is mainly used for description subsequently. In a specific implementation process, the mobile phone may also be replaced with any other electronic device. The communication circuit may be a communication circuit connected between an application processor of the mobile phone and a display of the mobile phone, or may be a communication circuit connected between an application processor of the mobile phone and a camera of the mobile phone, a communication circuit connected between an application processor of the mobile phone and a memory of the mobile phone, or the like. The communication circuit may alternatively be applied to another electronic device including two independent devices, for example, a mobile phone and an external display independent of the mobile phone. The communication circuit is a communication circuit connected between an application processor of the mobile phone and the external display.

Therefore, the solutions of this application include a solution in which a sending apparatus or a receiving apparatus exists independently. For example, embodiments of this application may provide a sending apparatus, a receiving apparatus, and a communication apparatus including the sending apparatus and the receiving apparatus.

Embodiments of this application may alternatively provide an electronic device including a sending apparatus, an electronic device including a receiving apparatus, and an electronic device including both the sending apparatus and the receiving apparatus. When the electronic device includes both the sending apparatus and the receiving apparatus, the sending apparatus and the receiving apparatus may form the communication circuit. Alternatively, when the electronic device includes both the sending apparatus and the receiving apparatus, the sending apparatus of the electronic device and a receiving apparatus of another electronic device form the communication circuit, and the receiving apparatus of the electronic device and a sending apparatus of the another electronic device form the communication circuit. When the electronic device includes the communication circuit, the electronic device may further include a separate sending apparatus, or include a separate receiving apparatus, or include both a separate sending apparatus and a separate receiving apparatus. This is not limited in embodiments of this application.

In embodiments of this application, the communication circuit may also be referred to as a communication module, a communication component, a communication unit, a communication apparatus, or the like. The sending apparatus may also be referred to as a sending end, a sending unit, a sending component, a sending circuit, or the like. The receiving apparatus may also be referred to as a receiving end, a receiving unit, a receiving component, a receiving circuit, or the like.

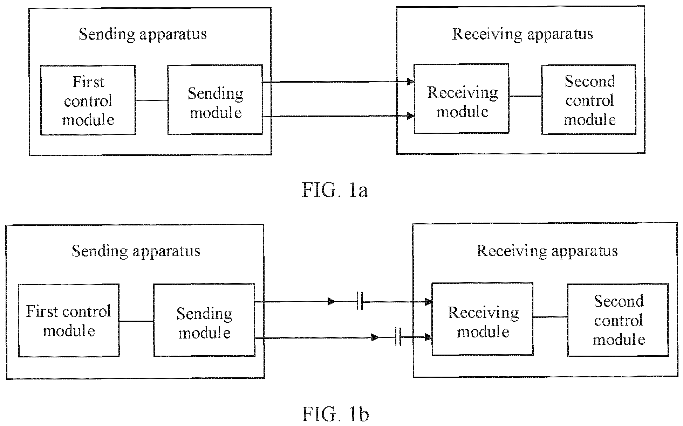

As shown in FIG. 1a and FIG. 1b, a communication circuit includes a sending apparatus and a receiving apparatus. The sending apparatus includes a first control module and a sending module. The receiving apparatus includes a receiving module and a second control module. The first control module is coupled to the sending module. The sending module is coupled to the receiving module through a differential signal cable. The second control module is coupled to the receiving module. The differential signal cable includes a P-pole differential signal cable and an N-pole differential signal cable.

The sending module and the receiving module are configured to: implement a function of a SerDes interface, and implement serial/parallel conversion of data. The SerDes interface has advantages such as high transmission bandwidth and a small quantity of signals. A manner of coupling the sending apparatus and the receiving apparatus may be a DC coupling (as shown in FIG. 1a) or an AC coupling (as shown in FIG. 1b). When the sending apparatus is coupled to the receiving apparatus in the AC manner, a coupling capacitor needs to be disposed on the differential signal cable, to isolate a direct current component between the sending apparatus and the receiving apparatus, so as to reduce direct current interference between the sending apparatus and the receiving apparatus.

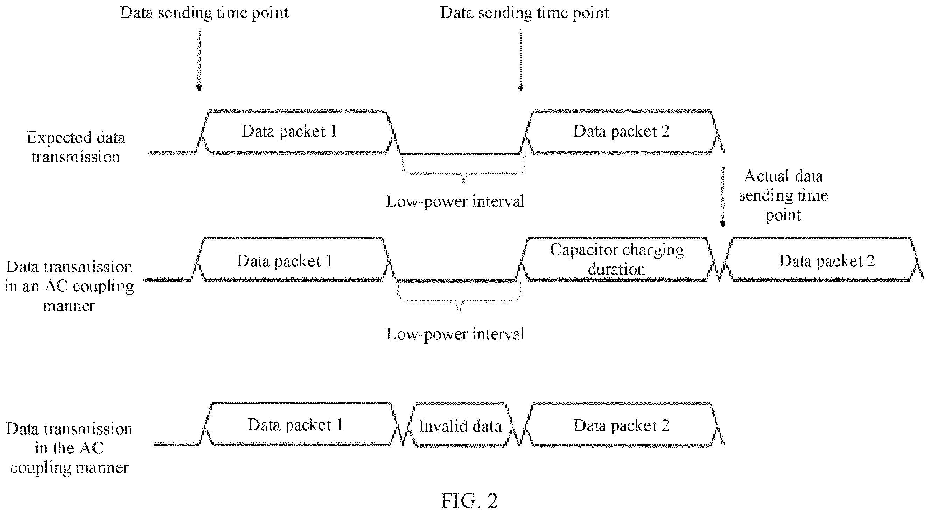

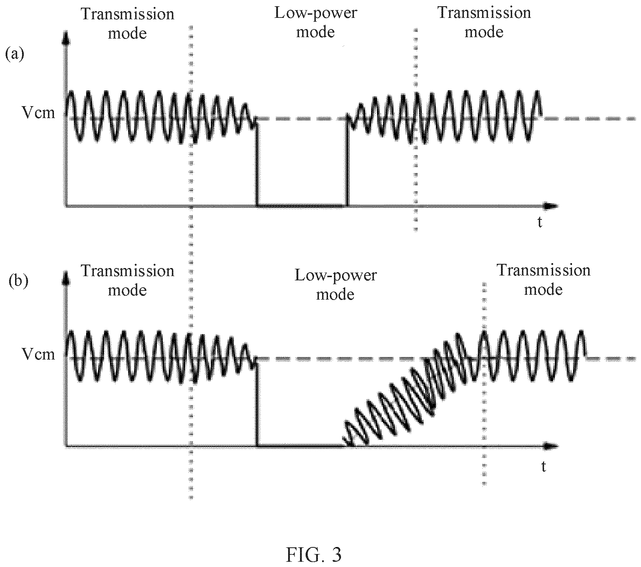

In a conventional communication circuit, to reduce power, as shown in FIG. 2, in a data transmission interval, a first control module controls a sending module to be powered off. A direct current voltage output by the sending module is a low level. When the direct current voltage output by the sending module is the low level, the sending module cannot send data. A receiving module detects that no data is transmitted on a differential signal cable. A second control module controls the receiving module to be powered off. A direct current voltage input by the receiving module is the low level. A voltage between two ends of a coupling capacitor is the low level. In this case, the sending module and the receiving module run in a low-power mode. The data transmission interval is a transmission time interval between any two adjacent data packets, for example, a transmission time interval between a data packet 1 and a data packet 2 in FIG. 2. The data transmission interval may be the transmission time interval between the any two adjacent data packets. A voltage of the low level may be, for example, 0 to 30 mV. When the first control module needs to transmit the data, the first control module controls the sending module to be powered on. As shown in FIG. 3, the direct current voltage output by the sending module may be quickly set up to a preset working voltage Vcm. When the direct current voltage output by the sending module reaches the preset working voltage Vcm, the sending module may send the data, and the sending module enters a data transmission mode.

When the communication circuit uses the AC manner for coupling, the coupling capacitor exists on the differential signal cable. After being powered on, the sending module needs to charge the coupling capacitor, so that the voltage between the two ends of the coupling capacitor is the preset working voltage Vcm. The voltage between the two ends of the coupling capacitor cannot suddenly change from the low level to the preset working voltage Vcm, but needs to gradually increase from the low level to the preset working voltage Vcm for a specific period of time. Therefore, the direct current voltage input by the receiving module cannot quickly reach the preset working voltage Vcm. When the direct current voltage input by the receiving module reaches the preset working voltage Vcm, the receiving module may receive the data and enter the data transmission mode. As a result, the receiving module exits the low-power mode for a longer time. Compared with the sending module, the receiving module generates a delay (for example, 20 μs) when exiting the low-power mode, resulting in low efficiency of data transmission between the sending module and the receiving module.

When an alternating current voltage output by the sending module is 800 mV, the preset working voltage Vcm may be 400 mV. When the alternating current voltage output by the sending module is 1200 mV, the preset working voltage Vcm may be 600 mV. Before delivery of the sending apparatus, the alternating current voltage output by the sending module and the preset working voltage Vcm of the sending module are set.

In the low-power mode, the direct current voltage output by the sending module is the low level, and the direct current voltage input by the receiving module is the low level. In the data transmission mode, a voltage (for example, the direct current voltage) output by the sending module is the preset working voltage Vcm, and a voltage (for example, the direct current voltage) input by the receiving module is the preset working voltage Vcm.

As shown in FIG. 2, a data packet needs to be sent in the communication circuit at a preset data sending time point. When charging duration of the coupling capacitor is greater than first preset duration, the data packet cannot be transmitted at the preset data sending time point. As a result, the receiving module detects, within second preset duration, that no data is transmitted on the differential signal cable, and the second control module keeps controlling the receiving module to be powered off. The direct current voltage input by the receiving module is the low level, and the receiving module cannot exit the low-power mode.

The first preset duration may be, for example, 10 μs to 21 μs. The second preset duration may be, for example, 95 μs to 105 μs.

The preset data sending time point may be set by the first control module. For example, when the communication circuit is a communication circuit connected between an application processor of a mobile phone and a display of the mobile phone, the first control module may set the preset data sending time point based on a display cycle of the display. The first preset duration is determined by the voltage output by the sending module, a current output by the sending module, and a capacitance value of the coupling capacitor. The second preset duration is set by the second control module.

To resolve a problem that the receiving module exits the low-power mode for a longer time or cannot exit the low-power mode, an existing communication circuit transmits invalid data in the data transmission interval, to prevent the sending module and the receiving module from entering the low-power mode, and ensure that the data packet is transmitted within the first preset duration. However, in this manner, power of the communication circuit is high.

The invalid data is a data packet filled with specific data. For example, all data in the invalid data is "0". When receiving the invalid data, the receiving apparatus discards the invalid data.

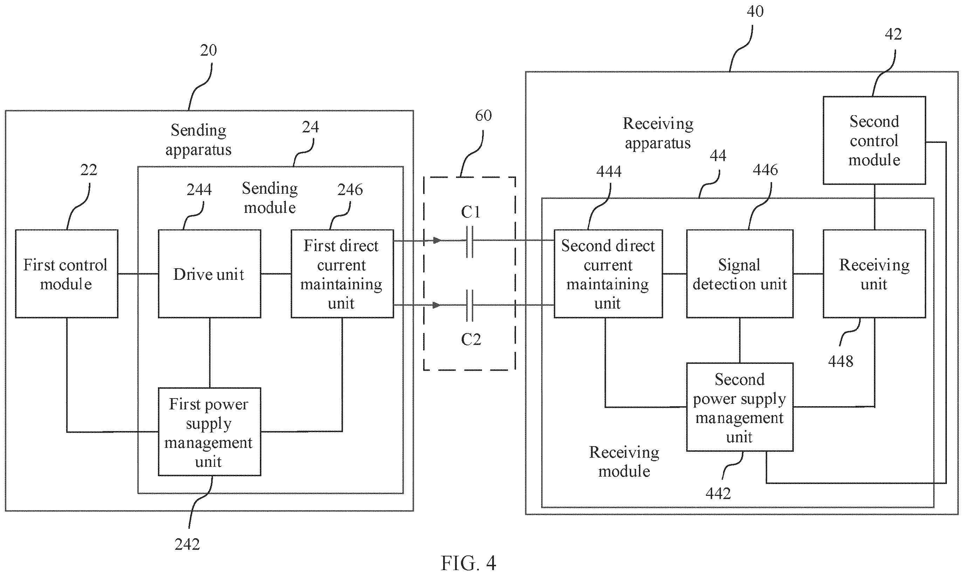

FIG. 4 is a schematic diagram of a principle of a communication circuit according to an embodiment of this application. The communication circuit includes a sending apparatus 20, a receiving apparatus 40, and a communication line 60 that couples the sending apparatus 20 and the receiving apparatus 40. The communication line 60 includes a first signal cable and a second signal cable. A first capacitor C1 is disposed on the first signal cable. A second capacitor C2 is disposed on the second signal cable. The first signal cable and the second signal cable may be differential signal cables. The first signal cable may be a P-pole differential signal cable, and the second signal cable may be an N-pole differential signal cable. The first capacitor C1 and the second capacitor C2 are configured to isolate a direct current component between the sending apparatus 20 and the receiving apparatus 40, so as to reduce direct current interference between the sending apparatus 20 and the receiving apparatus 40. Capacitance values of the first capacitor C1 and the second capacitor C2 may be equal or unequal, and the capacitance values of the first capacitor C1 and the second capacitor C2 may be, for example, 100 nF to 1000 nF. The first capacitor C1 and the second capacitor C2 with the same capacitance values can ensure that signals transmitted on the P-pole differential signal cable and the N-pole differential signal cable are the same.

The sending apparatus 20 may be an application processor of a mobile phone. The sending apparatus 20 includes a first control module 22 and a sending module 24. The sending module 24 includes a first power supply management unit 242, a drive unit 244, and a first direct current maintaining unit 246. An output end of the first control module 22 is coupled to an input end of the drive unit 244. A control end of the first control module 22 is coupled to an input end of the first power supply management unit 242. An output end of the drive unit 244 is coupled to a first end of the communication line 60. The first direct current maintaining unit 246 is coupled between the output end of the drive unit 244 and the first end of the communication line 60. An output end of the first power supply management unit 242 is separately coupled to the drive unit 244 and the first direct current maintaining unit 246.

The structures included in the sending module 24 may be independent structures or in another combination manner. For example, the sending apparatus 20 includes the first control module 22, the sending module 24, and the first power supply management unit 242, and the sending module 24 includes the drive unit 244 and the first direct current maintaining unit 246. Alternatively, the sending apparatus 20 includes the first control module 22, the first power supply management unit 242, the drive unit 244, and the first direct current maintaining unit 246.

The first control module 22 is configured to receive a data sending request. The first control module 22 may be a microcontroller unit (Microcontroller Unit, MCU) in the application processor. An input end of the first control module 22 may be coupled to a storage apparatus, and is configured to obtain to-be-sent data from the storage apparatus. The to-be-sent data obtained by the first control module 22 is parallel data. The storage apparatus may be a double data rate (Double Data Rate, DDR) synchronous dynamic random access memory, a flash memory, or a universal flash storage (Universal Flash Storage, UFS). The first control module 22 is further configured to send the parallel data to the drive unit 244.

The sending module 24 may be an interface circuit in the application processor.

The first power supply management unit 242 is controlled by the first control module 22. The first power supply management unit 242 is configured to control, according to a control instruction of the first control module 22, the drive unit 244 to be powered on or powered off. The first power supply management unit 242 is further configured to control, according to a control instruction of the first control module 22, the first direct current maintaining unit 246 to be powered on or powered off. The drive unit 244 is configured to: convert the parallel data into serial data, and send the serial data to the communication line 60 by adjusting a drive voltage and a drive current that are output to the communication line 60. The drive voltage includes a direct current voltage and an alternating current voltage. The first direct current maintaining unit 246 is configured to maintain a direct current voltage between the output end of the drive unit 244 and the first end of the communication line 60 as a first preset voltage.

The receiving apparatus 40 may be a display of the mobile phone. The receiving apparatus 40 includes a second control module 42 and a receiving module 44. The receiving module 44 includes a second power supply management unit 442, a second direct current maintaining unit 444, a signal detection unit 446, and a receiving unit 448. An input end of the receiving unit 448 is coupled to a second end of the communication line 60, and an output end of the receiving unit 448 is coupled to an input end of the second control module 42. A control end of the second control module 42 is coupled to an input end of the second power supply management unit 442. An output end of the second power supply management unit 442 is separately coupled to the second direct current maintaining unit 444 and the signal detection unit 446. The second direct current maintaining unit 444 and the signal detection unit 446 are coupled between the second end of the communication line 60 and the input end of the receiving unit 448.

The first capacitor C1 and the second capacitor C2 are located between the first end and the second end of the communication line 60. The first capacitor C1 and the second capacitor C2 each may include one capacitor, to ensure signal transmission quality of the communication line 60. The first capacitor C1 may be a first capacitor combination. The first capacitor combination may include one or more capacitors, or may further include another component other than the capacitor. The second capacitor C1 may be a second capacitor combination. The second capacitor combination may include one or more capacitors, or may further include another component other than the capacitor.

The second control module 42 may be an interface controller of the display. The display further includes a time sequence controller and a display panel. The second control module 42 is configured to transmit the data to the display panel by using the time sequence controller, and the display panel displays the data.

The receiving module 44 may be an interface circuit of the display.

The second power supply management unit 442 is controlled by the signal detection unit 446. The second power supply management unit 442 is configured to control, according to a control instruction of the signal detection unit 446, the second direct current maintaining unit 444 to be powered on or powered off. The second power supply management unit 442 is further configured to control, according to a control instruction of the signal detection unit 446, the signal detection unit 446 to be powered on or powered off. The second power supply management unit 442 is further configured to control, according to a control instruction of the signal detection unit 446, the receiving unit 448 to be powered on or powered off. The signal detection unit 446 is configured to detect whether data is transmitted on the communication line 60. The receiving unit 448 is configured to: receive the serial data on the communication line 60, and convert the serial data into the parallel data. The receiving unit 448 is further configured to transmit the parallel data to the second control module 42. The second direct current maintaining unit 444 is configured to maintain a direct current voltage between the input end of the receiving unit 448 and the second end of the communication line 60 as a second preset voltage.

The second power supply management unit 442 may further be controlled by the second control module 42. The second power supply management unit 442 may further control, according to a control instruction of the second control module 42, the second direct current maintaining unit 444 to be powered on or powered off. The second power supply management unit 442 may further control, according to a control instruction of the second control module 42, the signal detection unit 446 to be powered on or powered off. The second power supply management unit 442 may further control, according to a control instruction of the second control module 42, the receiving unit 448 to be powered on or powered off.

A priority of control performed by the second control module 42 on the second power supply management unit 442 may be higher than a priority of control performed by the signal detection unit 446 on the second power supply management unit 442. For example, at a same time point, a control instruction transmitted by the second control module 42 to the second power supply management unit 442 is an instruction for controlling the receiving unit 448 to be powered on, a control instruction transmitted by the signal detection unit 446 to the second power supply management unit 442 is an instruction for controlling the receiving unit 448 to be powered off, and the second power supply management unit 442 controls, according to the control instruction of the second control module 42, the receiving unit 448 to be powered on.

The following uses an example in which the communication circuit is applied to a mobile phone to describe a working principle of the communication circuit.

After the mobile phone is powered on, a microcontroller unit in the mobile phone and an interface controller of a display are powered on and started. When the microcontroller unit detects that the microcontroller unit is powered on, the microcontroller unit may generate a data sending request, and generate a first control signal based on the data sending request. The microcontroller unit transmits the first control signal to the first power supply management unit 242. The first power supply management unit 242 controls, based on the first control signal, the first direct current maintaining unit 246 to be powered on and the first direct current maintaining unit 246 to maintain a power-on state. The first control signal is an instruction for controlling the first direct current maintaining unit 246 to be powered on and controlling the first direct current maintaining unit 246 to maintain a power-on state. After being powered on, the first direct current maintaining unit 246 maintains the direct current voltage between the output end of the drive unit 244 and the first end of the communication line 60 as the first preset voltage. The interface controller generates a second control signal and transmits the second control signal to the second power supply management unit 442. The second power supply management unit 442 controls, based on the second control signal, the second direct current maintaining unit 444 and the signal detection unit 446 to be powered on and the second direct current maintaining unit 444 and the signal detection unit 446 to maintain a power-on state. The second control signal is an instruction for controlling the second direct current maintaining unit 444 and the signal detection unit 446 to be powered on, and the second control signal is also an instruction for controlling the second direct current maintaining unit 444 and the signal detection unit 446 to maintain a power-on state. After being powered on, the second direct current maintaining unit 444 maintains the direct current voltage between the input end of the receiving unit 448 and the second end of the communication line 60 as the second preset voltage. A display panel needs to display data after the mobile phone is powered on. Therefore, when the microcontroller unit detects that the microcontroller unit is powered on, the microcontroller unit generates the data sending request. When the microcontroller unit generates the first control signal based on the data sending request, the microcontroller unit obtains to-be-sent data from a storage apparatus. The to-be-sent data obtained by the microcontroller unit is parallel data. The microcontroller unit generates a third control signal and transmits the third control signal to the first power supply management unit 242. The first power supply management unit 242 controls, based on the third control signal, the drive unit 244 to be powered on and the drive unit 244 to maintain a power-on state. The third control signal is an instruction for controlling the drive unit 244 to be powered on and controlling the drive unit 244 to maintain a power-on state. The microcontroller unit sends the parallel data to the drive unit 244. After being powered on, the drive unit 244 can receive the parallel data sent by the microcontroller unit, and convert the parallel data into serial data. The drive unit 244 further sends the serial data to the communication line 60 by adjusting a drive voltage and a drive current that are output to the communication line 60. The signal detection unit 446 detects that an alternating current voltage value on the communication line 60 is greater than a preset voltage value, and then determines that the data is transmitted on the communication line 60. The signal detection unit 446 generates a fourth control signal and transmits the fourth control signal to the second power supply management unit 442. The second power supply management unit 442 controls, based on the fourth control signal, the receiving unit 448 to be powered on and the receiving unit 448 to maintain a power-on state. The fourth control signal is an instruction for controlling the receiving unit 448 to be powered on and controlling the receiving unit 448 to maintain a power-on state. After being powered on, the receiving unit 448 receives the serial data on the communication line 60, and converts the serial data into the parallel data. The receiving unit 448 further transmits, to the interface controller, the parallel data obtained after conversion. The interface controller transmits the received parallel data to the display panel by using a time sequence controller, and the display panel displays the parallel data.

When the mobile phone enters a standby mode, that is, the storage apparatus has no data that needs to be displayed, the storage apparatus may transmit a sending stop request to the microcontroller unit. The sending stop request may be an instruction for indicating that the storage apparatus has no data that needs to be displayed. The microcontroller unit generates a fifth control signal based on the sending stop request, and transmits the fifth control signal to the first power supply management unit 242. The first power supply management unit 242 controls, based on the fifth control signal, the drive unit 244 to be powered off and the drive unit 244 to maintain a power-off state. The fifth control signal is an instruction for controlling the drive unit 244 to be powered off and controlling the drive unit 244 to maintain a power-off state. After the drive unit 244 is powered off, a drive voltage output by the drive unit 244 is a low level. At a preset detection time point, the signal detection unit 446 detects that the alternating current voltage value on the communication line 60 is less than or equal to the preset voltage value, and then determines that no data is transmitted on the communication line 60. The signal detection unit 446 generates a sixth control signal and transmits the sixth control signal to the second power supply management unit 442. The second power supply management unit 442 controls, based on the sixth control signal, the receiving unit 448 to be powered off and the receiving unit 448 to maintain a power-off state. The sixth control signal is an instruction for controlling the receiving unit 448 to be powered off and controlling the receiving unit 448 to maintain a power-off state. An application processor and the display enter a low-power mode. In this case, because both the drive unit 244 and the receiving unit 448 are powered off and maintain a power-off state, power of the mobile phone can be reduced.

In this embodiment, when the application processor and the display enter the low-power mode, the first power supply management unit 242 controls the first direct current maintaining unit 246 to maintain a power-on state, and the second power supply management unit 442 controls the second direct current maintaining unit 444 and the signal detection unit 446 to maintain a power-on state.

The first preset voltage is equal to a direct current voltage output by the drive unit 244, and the second preset voltage is equal to a direct current voltage input by the receiving unit 448. The first preset voltage may be the same as or different from the second preset voltage.

The signal detection unit 446 may include an operational amplifier. A non-inverting input end of the operational amplifier is connected to the P-pole differential signal cable, and an inverting input end of the operational amplifier is connected to the N-pole differential signal cable. Alternating current voltages of the P-pole differential signal cable and the N-pole differential signal cable are separately input to the operational amplifier through the non-inverting input end and the inverting input end. An output result of the operational amplifier represents whether an amplitude of the alternating current voltage is greater than a preset amplitude, and then the signal detection unit 446 determines whether data is transmitted on the communication line 60.

The preset voltage value may be, for example, 100 mV to 1200 mV. When the communication circuit is applied to the mobile phone, the preset voltage value is, for example, 400 mV or 800 mV. The preset detection duration may be, for example, 95 μs to 105 μs.

When the communication circuit is a communication circuit connected between the application processor of the mobile phone and a camera of the mobile phone, the sending apparatus 20 may be the camera of the mobile phone, the receiving apparatus 40 may be the application processor of the mobile phone, the first control module 22 is an interface controller in the camera, and the second control module 42 is the microcontroller unit in the application processor. The first capacitor C1 and the second capacitor C2 may be disposed on the communication line 60 located on the camera, or may be disposed on the communication line 60 located on the application processor. After the mobile phone is powered on, the interface controller in the camera and the microcontroller unit in the application processor are powered on and started. When the microcontroller unit in the application processor detects a request that an application on the mobile phone needs to obtain data in the camera, the microcontroller unit in the application processor transmits a data sending request to the interface controller in the camera through another communication circuit (which is not the communication circuit shown in the figure). The data sending request is used to control the interface controller in the camera to send the data. The interface controller in the camera obtains the to-be-sent data from the storage apparatus. The microcontroller unit controls, by using the second power supply management unit 442, the second direct current maintaining unit 444 and the signal detection unit 446 to be powered on and the second direct current maintaining unit 444 and the signal detection unit 446 to maintain a power-on state. The interface controller in the camera controls, by using the first power supply management unit 242, the first direct current maintaining unit 246 and the drive unit 244 to be powered on and the first direct current maintaining unit 246 and the drive unit 244 to maintain a power-on state. The drive unit 244 of the camera sends the data to the receiving unit 448 of the application processor. When the microcontroller unit in the application processor does not detect the request that the application on the mobile phone needs to obtain the data in the camera, the microcontroller unit in the application processor transmits a sending stop request to the interface controller in the camera. The sending stop request is used to control the interface controller in the camera to stop sending the data. The microcontroller unit controls, by using the second power supply management unit 442, the second direct current maintaining unit 444 and the signal detection unit 446 to maintain a power-on state. The interface controller in the camera controls, by using the first power supply management unit 242, the first direct current maintaining unit 246 and the drive unit 244 to maintain a power-on state.

In this embodiment, regardless of whether the first control module 22 sends the data, the first power supply management unit 242 controls the first direct current maintaining unit 246 to maintain a power-on state, and the second power supply management unit 442 controls the second direct current maintaining unit 444 to maintain a power-on state. The first direct current maintaining unit 246 can maintain the direct current voltage between the output end of the drive unit 244 and the first end of the communication line 60 as the first preset voltage, and the second direct current maintaining unit 444 can maintain the direct current voltage between the input end of the receiving unit 448 and the first end of the communication line 60 as the second preset voltage. Therefore, a direct current voltage between two ends of the first capacitor C1 and a direct current voltage between two ends of the second capacitor C2 on the communication line 60 can be respectively maintained as the first preset voltage and the second preset voltage. When the communication circuit exits the low-power mode, the first capacitor C1 and the second capacitor C2 on the communication line 60 do not need to be charged. As a result, the communication circuit exits the low-power mode for a shorter time. This improves data transmission efficiency of the communication circuit. When the first control module 22 does not need to send the data, the first power supply management unit 242 controls the drive unit 244 to maintain a power-off state, the second power supply management unit 442 controls the receiving unit 448 to maintain a power-off state, and the communication circuit runs in the low-power mode. This reduces power.

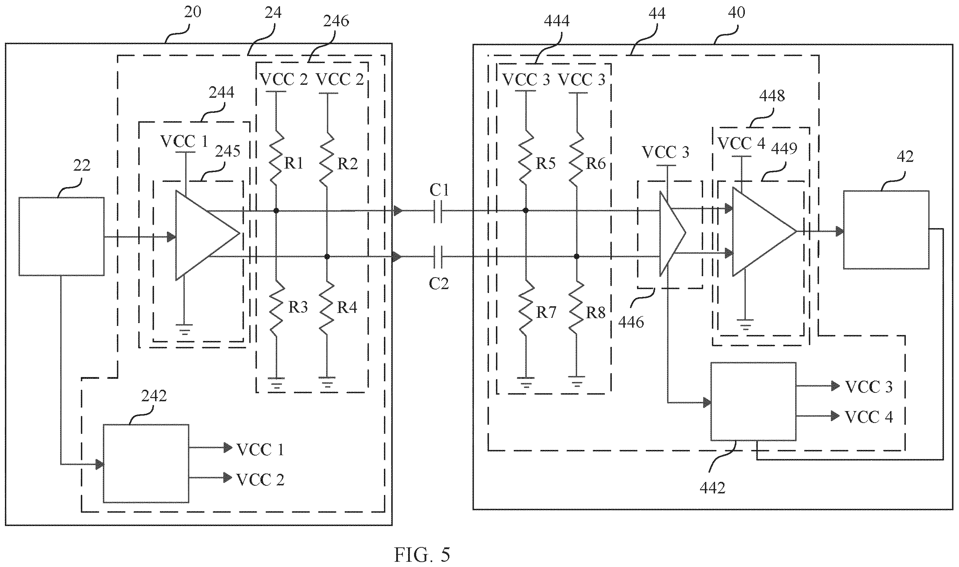

FIG. 5 is a diagram of an optional implementation circuit of the communication circuit in FIG. 4. In this embodiment, the drive unit 244 includes a drive circuit 245 and a first power supply VCC 1. An input end of the drive circuit 245 is coupled to the output end of the first control module 22. A first output end of the drive circuit 245 is coupled to a first end of the first capacitor C1. A second output end of the drive circuit 245 is coupled to a first end of the second capacitor C2. A power supply end of the drive circuit 245 is coupled to the first power supply VCC 1. The input end of the drive circuit 245 is used as the input end of the drive unit 244. The first output end and the second output end of the drive circuit 245 are used as the output end of the drive unit 244. The first direct current maintaining unit 246 includes a first resistor R1, a second resistor R2, a third resistor R3, a fourth resistor R4, and a second power supply VCC 2. A first end of the first resistor R1 is separately coupled to a first end of the third resistor R3 and the first end of the first capacitor C1. A second end of the first resistor R1 is coupled to the second power supply VCC 2. A second end of the third resistor R3 is grounded. A first end of the second resistor R2 is separately coupled to a first end of the fourth resistor R4 and the first end of the second capacitor C2. A second end of the second resistor R2 is coupled to the second power supply VCC 2. A second end of the fourth resistor R4 is grounded. Herein, the following formulas may be met:

$$Vr_{13} = \frac{V2*r3}{r1+r3} \ (1)$$

$$Vr_{24} = \frac{V2*r4}{r2+r4} \ (2)$$

Herein, $Vr_{13}$ is a voltage at the first end of the first capacitor C1, and $Vr_{13}$ is, for example, a direct current voltage; V2 is a voltage of the second power supply VCC 2, and V2 is, for example, a direct current voltage; r1 is a resistance value of the first resistor R1; r2 is a resistance value of the second resistor R2; r3 is a resistance value of the third resistor R3; r4 is a resistance value of the fourth resistor R4; and $Vr_{24}$ is a voltage at the first end of the second capacitor C2, and $Vr_{24}$ is, for example, a direct current voltage.

The resistance value r1 of the first resistor R1 to the resistance value r4 of the fourth resistor R4 satisfy:

$$Vr_{13} = Vr_{24} = V_{cm-tx} \ (3)$$

Alternatively, a value of $Vr_{13}$ is similar to a value of $Vr_{24}$, and is similar to a value of $V_{cm-tx}$, and a ratio of any two of the three may range from 0.95 to 1.05.

$V_{cm-tx}$ is a direct current voltage output by the drive circuit 245.

Therefore, the following formula is obtained:

$$\frac{r3}{r1+r3} = \frac{r4}{r2+r4} \ (4)$$

The resistance value r1 of the first resistor R1 to the resistance value r4 of the fourth resistor R4 and the voltage V2 of the second power supply VCC 2 may be values that are set before delivery of the sending apparatus 20.

A value of $\frac{r3}{r1+r3}$ may be the same as or similar to a value of $\frac{r4}{r2+r4}$. For example, a ratio of

$$\frac{r3}{r1+r3} \text{ to } \frac{r4}{r2+r4} \text{ is: } 0.95 \leq \frac{\frac{r3}{r1+r3}}{\frac{r4}{r2+r4}} \leq 1.05 \ (5)$$

The formula (5) is normalized to obtain:

$$0.95 \leq \frac{r3*(r2+r4)}{r4*(r1+r3)} \leq 1.05 \ (6)$$

The first power supply management unit 242 is separately coupled to the first power supply VCC 1 and the second power supply VCC 2. The first power supply management unit 242 controls the first power supply VCC 1 to be powered on, so as to control the drive unit 244 to be powered on, and controls the first power supply VCC 1 to maintain a power-on state, so as to control the drive unit 244 to maintain a power-on state. The first power supply management unit 242 further controls the first power supply VCC 1 to be powered off, so as to control the drive unit 244 to be powered off, and controls the first power supply VCC 1 to maintain a power-off state, so as to control the drive unit 244 to maintain a power-off state. The first power supply management unit 242 controls the second power supply VCC 2 to be powered on, so as to control the first direct current maintaining unit 246 to be powered on, and controls the second power supply VCC 2 to maintain a power-on state, so as to control the first direct current maintaining unit 246 to maintain a power-on state.

The first power supply management unit 242 may control, by using a switch, the first power supply VCC 1 to be powered on and maintain a power-on state or be powered off and maintain a power-off state. The first power supply management unit 242 may also control, by using a switch, the second power supply VCC 2 to be powered on and maintain a power-on state or be powered off and maintain a power-off state.

The second direct current maintaining unit 444 includes a fifth resistor R5, a sixth resistor R6, a seventh resistor R7, an eighth resistor R8, and a third power supply VCC 3. A first end of the fifth resistor R5 is separately coupled to a second end of the first capacitor C1 and a first end of the seventh resistor R7. A second end of the fifth resistor R5 is coupled to the third power supply VCC 3. A second end of the seventh resistor R7 is grounded. A first end of the sixth resistor R6 is separately coupled to a second end of the second capacitor C2 and a first end of the eighth resistor R8. A second end of the sixth resistor R6 is coupled to the third power supply VCC 3. A second end of the eighth resistor R8 is grounded. The third power supply VCC 3 is further coupled to the signal detection unit 446 for power supply to the signal detection unit 446. The receiving unit 448 includes a receiving circuit 449 and a fourth power supply VCC 4. An input end of the receiving circuit 449 is coupled to the second end of the communication line 60. An output end of the receiving circuit 449 is coupled to the second control module 42. A power supply end of the receiving circuit 449 is coupled to the fourth power supply VCC 4. The input end of the receiving circuit 449 is used as the input end of the receiving unit 448. The output end of the receiving circuit 449 is used as the output end of the receiving unit 448.

Herein, the following formulas may be met:

$$Vr_{57} = \frac{V3*r5}{r5+r7} \ (7)$$

$$Vr_{68} = \frac{V3*r6}{r6+r8} \ (8)$$

Herein, $Vr_{57}$ is a voltage at the second end of the first capacitor C1, and $Vr_{57}$ is a direct current voltage; V3 is a voltage of the third power supply VCC 3, and V3 is, for example, a direct current voltage; r5 is a resistance value of the fifth resistor R5; r6 is a resistance value of the sixth resistor R6; r7 is a resistance value of the seventh resistor R7; r8 is a resistance value of the eighth resistor; and $Vr_{68}$ is a voltage at the second end of the second capacitor C2, and $Vr_{68}$ is a direct current voltage.

The resistance value r5 of the fifth resistor R5 to the resistance value r8 of the eighth resistor R8 satisfy:

$$Vr_{57} = Vr_{68} = V_{cm-rx} \ (9)$$

Alternatively, a value of $Vr_{57}$ is similar to a value of $Vr_{68}$, the value of $Vr_{68}$ is similar to a value of $V_{cm-rx}$, the value of $Vr_{57}$ is similar to the value of $V_{cm-rx}$, and a ratio of any two ranges from 0.95 to 1.05.

$V_{cm-rx}$ is a direct current voltage input by the receiving circuit 449.

Therefore, the following formula is obtained:

$$\frac{r5}{r5+r7} = \frac{r6}{r6+r8} \ (10)$$

The resistance value r5 of the fifth resistor R5 to the resistance value r8 of the eighth resistor R8 and the voltage V3 of the third power supply VCC 3 may be values that are set before delivery of the receiving apparatus 40.

A value of $\frac{r5}{r5+r7}$ may be the same as or similar to a value of $\frac{r6}{r6+r8}$. For example, a ratio of

$$\frac{r5}{r5+r7} \ \text{to} \ \frac{r6}{r6+r8} \ \text{is:} \ 0.95 \le \frac{\frac{r5}{r5+r7}}{\frac{r6}{r6+r8}} \le 1.05 \ (11)$$

The formula (11) is normalized to obtain:

$$0.95 \leq \frac{r5*(r6+r8)}{r6*(r5+r7)} \leq 1.05 \quad (12)$$

The second power supply management unit 442 is separately coupled to the third power supply VCC 3 and the fourth power supply VCC 4. The second power supply management unit 442 controls the third power supply VCC 3 to be powered on, so as to control the second direct current maintaining unit 444 and the signal detection unit 446 to be powered on, and controls the third power supply VCC 3 to maintain a power-on state, so as to control the second direct current maintaining unit 444 and the signal detection unit 446 to maintain a power-on state. The second power supply management unit 442 controls the fourth power supply VCC 4 to be powered on, so as to control the receiving unit 448 to be powered on, and controls the fourth power supply VCC 4 to maintain a power-on state, so as to control the receiving unit 448 to maintain a power-on state. The second power supply management unit 442 controls the fourth power supply VCC 4 to be powered off, so as to control the receiving unit 448 to be powered off, and controls the fourth power supply VCC 4 to maintain a power-off state, so as to control the receiving unit 448 to maintain a power-off state.

The first end of the first capacitor C1 or a first end of the first signal cable, and the first end of the second capacitor C2 or a first end of the second signal cable are used as the first end of the communication line 60. The second end of the first capacitor C1 or a second end of the first signal cable, and the second end of the second capacitor C2 or a second end of the second signal cable are used as the second end of the communication line 60.

The second power supply management unit 442 may control, by using a switch, the third power supply VCC 3 to be powered on and maintain a power-on state or be powered off and maintain a power-off state. The second power supply management unit 442 may also control, by using a switch, the fourth power supply VCC 4 to be powered on and maintain a power-on state or be powered off and maintain a power-off state.

The first resistor R1, the second resistor R2, the third resistor R3, the fourth resistor R4, the fifth resistor R5, the sixth resistor R6, the seventh resistor R7, and the eighth resistor R8 each may be one resistor or include a plurality resistors.

When the resistance value r1 of the first resistor R1, the resistance value r2 of the second resistor R2, the resistance value r3 of the third resistor R3, the resistance value r4 of the fourth resistor R4, the resistance value r5 of the fifth resistor R5, the resistance value r6 of the sixth resistor R6, the resistance value r7 of the seventh resistor R7, and the resistance value r8 of the eighth resistor R8 are all greater than 1 KΩ, a power loss due to electric leakage of the first direct current maintaining unit 246 and the second direct current maintaining unit 444 is reduced.

After the first control module 22 and the second control module 42 are powered on, the first power supply management unit 242 controls the second power supply VCC 2 to be powered on, and controls the second power supply VCC 2 to maintain a power-on state, and the second power supply management unit 442 controls the third power supply VCC 3 to be powered on, and controls the third power supply VCC 3 to maintain a power-on state. When the first control module 22 receives the data sending request, the first power supply management unit 242 controls the first power supply VCC 1 to be powered on, and controls the first power supply VCC 1 to maintain a power-on state, and the second power supply management unit 442 controls the fourth power supply VCC 4 to be powered on, and controls the fourth power supply VCC 4 to maintain a power-on state. In this case, the direct current voltage at the first end of the first capacitor C1 is $Vr_{13}$, the direct current voltage at the second end of the first capacitor C1 is $Vr_{57}$, the direct current voltage at the first end of the second capacitor C2 is $Vr_{24}$, and the direct current voltage at the second end of the second capacitor C2 is $Vr_{68}$.

When the first control module 22 receives the sending stop request, for example, when a black screen of the mobile phone is displayed, or the mobile phone currently has no application running in the foreground, or a current application is closed, the first power supply management unit 242 controls the first power supply VCC 1 to be powered off, and controls the first power supply VCC 1 to maintain a power-off state, and the second power supply management unit 442 controls the fourth power supply VCC 4 to be powered off, and controls the fourth power supply VCC 4 to maintain a power-off state. In this case, the direct current voltage at the first end of the first capacitor C1 is a low level, the direct current voltage at the second end of the first capacitor C1 is the low level, the direct current voltage at the first end of the second capacitor C2 is the low level, and the direct current voltage at the second end of the second capacitor C2 is the low level.

Certainly, in a specific implementation process, when the first control module 22 receives the sending stop request, the first power supply management unit 242 may alternatively control the first power supply VCC 1 to maintain a power-on state, and the second power supply management unit 442 controls the fourth power supply VCC 4 to maintain a power-on state.

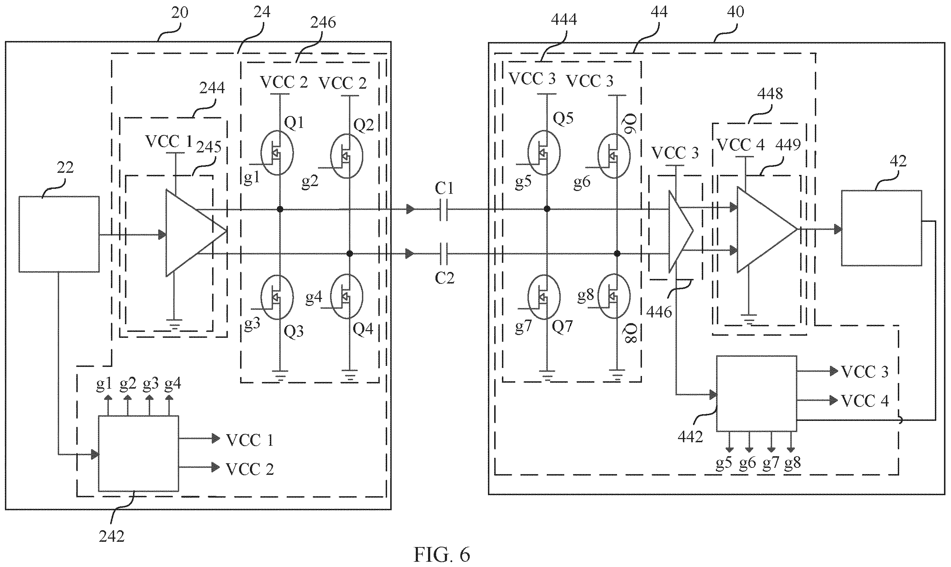

FIG. 6 is a diagram of another optional implementation circuit of the communication circuit in FIG. 4. A difference between FIG. 6 and FIG. 5 is that the first resistor R1, the second resistor R2, the third resistor R3, and the fourth resistor R4 of the first direct current maintaining unit 246 are replaced with a first MOS transistor Q1, a second MOS transistor Q2, a third MOS transistor Q3, and a fourth MOS transistor Q4. A source of the first MOS transistor Q1 is separately coupled to a drain of the third MOS transistor Q3 and the first end of the first capacitor C1. A drain of the first MOS transistor Q1 is coupled to the second power supply VCC 2. A source of the third MOS transistor Q3 is grounded. A source of the second MOS transistor Q2 is separately coupled to a drain of the fourth MOS transistor Q4 and the first end of the second capacitor C2. A drain of the second MOS transistor Q2 is coupled to the second power supply VCC 2. A source of the fourth MOS transistor Q4 is grounded. A gate g1 of the first MOS transistor Q1, a gate g2 of the second MOS transistor Q2, a gate g3 of the third MOS transistor Q3, and a gate g4 of the fourth MOS transistor Q4 are all coupled to the first power supply management unit 242. The first power supply management unit 242 may control turn-on and cut-off frequencies of the first MOS transistor Q1 to the fourth MOS transistor Q4, to control $Vr_{13} = Vr_{24} = V_{cm-tx}$. Specifically, the first power supply management unit 242 may separately transmit a pulse width modulation (pulse width modulation, PWM) signal to the gate of the first MOS transistor Q1 to the gate g4 of the fourth MOS transistor Q4, and adjust a duty cycle of the PWM signal, to adjust the turn-on and cut-off frequencies of the first MOS transistor Q1 to the fourth MOS transistor Q4.

The fifth resistor R5, the sixth resistor R6, the seventh resistor R7, and the eighth resistor R8 of the second direct current maintaining unit 444 are replaced with a fifth MOS transistor Q5, a sixth MOS transistor Q6, a seventh MOS transistor Q7, and an eighth MOS transistor Q8. A source of the fifth MOS transistor Q5 is separately coupled to a drain of the seventh MOS transistor Q7 and the second end of the first capacitor C1. A drain of the fifth MOS transistor Q5 is coupled to the third power supply VCC 3. A source of the seventh MOS transistor Q7 is grounded. A source of the sixth MOS transistor Q6 is separately coupled to a drain of the eighth MOS transistor Q8 and the second end of the second capacitor C2. A drain of the sixth MOS transistor Q6 is coupled to the third power supply VCC 3. A source of the eighth MOS transistor Q8 is grounded. A gate g1 of the fifth MOS transistor Q5, a gate g2 of the sixth MOS transistor Q6, a gate g3 of the seventh MOS transistor Q7, and a gate g4 of the eighth MOS transistor Q8 are all coupled to the second power supply management unit 442. The second power supply management unit 442 may control turn-on and cut-off frequencies of the fifth MOS transistor Q5 to the eighth MOS transistor Q8, to control $Vr_{57} = Vr_{68} = V_{cm-rx}$. Specifically, the second power supply management unit 442 may separately transmit a pulse width modulation (pulse width modulation, PWM) signal to the gate of the fifth MOS transistor Q5 to the gate of the eighth MOS transistor Q8, and adjust a duty cycle of the PWM signal, to adjust the turn-on and cut-off frequencies of the fifth MOS transistor Q5 to the eighth MOS transistor Q8.

After the first control module 22 and the second control module 42 are powered on, the first power supply management unit 242 controls the second power supply VCC 2 to be powered on, and controls the second power supply VCC 2 to maintain a power-on state, the second power supply management unit 442 controls the third power supply VCC 3 to be powered on, and controls the third power supply VCC 3 to maintain a power-on state, the first power supply management unit 242 controls the turn-on and cut-off frequencies of the first MOS transistor Q1 to the fourth MOS transistor Q4, and the second power supply management unit 442 controls the turn-on and cut-off frequencies of the fifth MOS transistor Q5 to the eighth MOS transistor Q8. In this way, a direct current voltage at the first end of the first capacitor C1 is $Vr_{13}$, a direct current voltage at the second end of the first capacitor C1 is $Vr_{57}$, a direct current voltage at the first end of the second capacitor C2 is $Vr_{24}$, and a direct current voltage at the second end of the second capacitor C2 is $Vr_{68}$. When the first control module 22 has no data to send, the first power supply management unit 242 controls the first power supply VCC 1 to be powered off, and controls the first power supply VCC 1 to maintain a power-off state, and the second power supply management unit 442 controls the fourth power supply VCC 4 to be powered off, and controls the fourth power supply VCC 4 to maintain a power-off state.

When the first control module 22 receives the data sending request, the first power supply management unit 242 controls the first power supply VCC 1 to be powered on, and controls the first power supply VCC 1 to maintain a power-on state, and the second power supply management unit 442 controls the fourth power supply VCC 4 to be powered on, and controls the fourth power supply VCC 4 to maintain a power-on state.

In this embodiment, the first power supply management unit 242 can adjust the duty cycles of the PWM signals transmitted to the gate of the first MOS transistor Q1 to the gate of the fourth MOS transistor Q4, to adjust the turn-on and cut-off frequencies of the first MOS transistor Q1 to the fourth MOS transistor Q4, so as to control a current between the sources and the drains of the first MOS transistor Q1 to the fourth MOS transistor Q4, that is, equivalently control resistance between the sources and the drains of the first MOS transistor Q1 to the fourth MOS transistor Q4. To be specific, the following formulas may be met:

$$Vr_{13} = \frac{V2*r3'}{r1'+r3'} \ (13)$$

$$Vr_{24} = \frac{V2*r4'}{r2'+r4'} \ (14)$$

Herein, r1' is an equivalent resistance value between the source and the drain of the first MOS transistor Q1, r2' is an equivalent resistance value between the source and the drain of the second MOS transistor Q2, r3' is an equivalent resistance value between the source and the drain of the third MOS transistor Q3, and r4' is an equivalent resistance value between the source and the drain of the fourth MOS transistor Q4.

The equivalent resistance value r1' between the source and the drain of the first MOS transistor Q1, the equivalent resistance value r2' between the source and the drain of the second MOS transistor Q2, the equivalent resistance value r3' between the source and the drain of the third MOS transistor Q3, and the equivalent resistance value r4' between the source and the drain of the fourth MOS transistor Q4 satisfy:

$$Vr_{13} = Vr_{24} = V_{cm-tx} \quad (3)$$

Same as those in the foregoing descriptions, values of the three may also be similar. For example, a ratio of any two ranges from 0.95 to 1.05.

Therefore, the following formula is obtained:

$$\frac{r3'}{r1'+r3'} = \frac{r4'}{r2'+r4'} \quad (15)$$

A value of $\frac{r3'}{r1'+r3'}$ may be the same as or similar to a value of $\frac{r4'}{r2'+r4'}$ . For example, a ratio of

$\frac{r3'}{r1'+r3'}$ to $\frac{r4'}{r2'+r4'}$ is: $0.95 \leq \dfrac{\frac{r3'}{r1'+r3'}}{\frac{r4'}{r2'+r4'}} \leq 1.05 \quad (16)$

The formula (16) is normalized to obtain:

$$0.95 \leq \frac{r3'*(r2'+r4')}{r4'*(r1'+r3')} \leq 1.05 \quad (17)$$

The equivalent resistance value r1' between the source and the drain of the first MOS transistor Q1 may be implemented by adjusting the duty cycle of the PWM signal transmitted to the gate of the first MOS transistor Q1. The equivalent resistance value r2' between the source and the drain of the second MOS transistor Q2 may be implemented by adjusting a duty cycle of a PWM signal transmitted to the gate of the second MOS transistor Q2. The equivalent resistance value r3' between the source and the drain of the third MOS transistor Q3 may be implemented by adjusting a duty cycle of a PWM signal transmitted to the gate of the third MOS transistor Q3. The equivalent resistance value r4' between the source and the drain of the fourth MOS transistor Q4 may be implemented by adjusting the duty cycle of the PWM signal transmitted to the gate of the fourth MOS transistor Q4.

The second power supply management unit 442 can adjust the duty cycles of the PWM signals transmitted to the gate of the fifth MOS transistor Q5 to the gate of the eighth MOS transistor Q8, to adjust the turn-on and cut-off frequencies of the fifth MOS transistor Q5 to the eighth MOS transistor Q8, so as to control a current between the sources and the drains of the fifth MOS transistor Q5 to the eighth MOS transistor Q8, that is, equivalently control resistance between the sources and the drains of the fifth MOS transistor Q5 to the eighth MOS transistor Q8. To be specific, the following formulas may be met:

$$Vr_{57} = \frac{V3*r5'}{r5'+r7'} \quad (18)$$

$$Vr_{68} = \frac{V3*r6'}{r6'+r8'} \quad (19)$$

Herein, r5' is an equivalent resistance value between the source and the drain of the fifth MOS transistor Q5, r6' is an equivalent resistance value between the source and the drain of the sixth MOS transistor Q6, r7' is an equivalent resistance value between the source and the drain of the seventh MOS transistor Q7, and r8' is an equivalent resistance value between the source and the drain of the eighth MOS transistor Q8.

The equivalent resistance value r5' between the source and the drain of the fifth MOS transistor Q5, the equivalent resistance value r6' between the source and the drain of the sixth MOS transistor Q6, the equivalent resistance value r7' between the source and the drain of the seventh MOS transistor Q7, and the equivalent resistance value r8' between the source and the drain of the eighth MOS transistor Q8 satisfy:

$$Vr_{57} = Vr_{68} = V_{cm-rx} \quad (9)$$

Same as those in the foregoing descriptions, values of the three may also be similar. For example, a ratio of any two ranges from 0.95 to 1.05.

Therefore, the following formula is obtained:

$$\frac{r5'}{r5'+r7'} = \frac{r6'}{r6'+r8'} \quad (20)$$

A value of $\frac{r5'}{r5'+r7'}$ may be the same as or similar to a value of $\frac{r6'}{r6'+r8'}$. For example, a ratio of

$$\frac{r5'}{r5'+r7'} \text{ to } \frac{r6'}{r6'+r8'} \text{is: } 0.95 \leq \frac{\frac{r5'}{r5'+r7'}}{\frac{r6'}{r6'+r8'}} \leq 1.05 \quad (21)$$

The formula (21) is normalized to obtain:

$$0.95 \leq \frac{r5'*(r6'+r8')}{r6'*(r5'+r7')} \leq 1.05 \quad (22)$$

The equivalent resistance value r5' between the source and the drain of the fifth MOS transistor Q5, the equivalent resistance value r6' between the source and the drain of the sixth MOS transistor Q6, the equivalent resistance value r7' between the source and the drain of the seventh MOS transistor Q7, and the equivalent resistance value r8' between the source and the drain of the eighth MOS transistor Q8 may be implemented by adjusting the duty cycles of the PWM signals transmitted to the gate of the fifth MOS transistor Q5 to the gate of the eighth MOS transistor Q8.

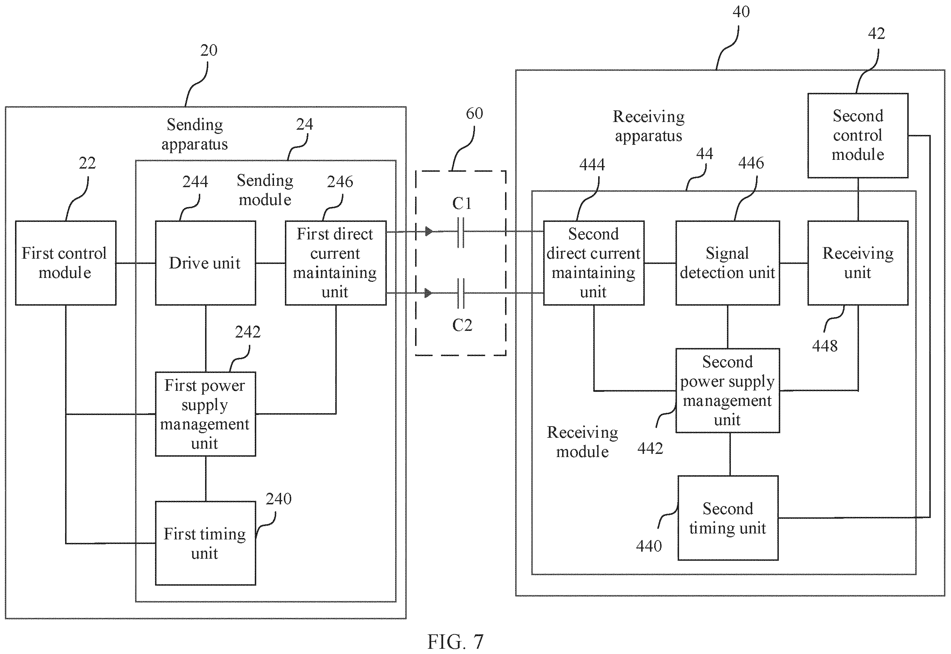

FIG. 7 is a schematic diagram of a principle of a communication circuit according to another embodiment of this application. Different from that in FIG. 3, the sending module 24 further includes a first timing unit 240. An input end of the first timing unit 240 is coupled to the control end of the first control module 22, and an output end of the first timing unit 240 is coupled to the input end of the first power supply management unit 242. The first control module 22 is configured to transmit a data transmission cycle to the first timing unit 240. The first timing unit 240 is configured to: generate a power-on time point and a power-off time point based on the data transmission cycle, and transmit the power-on time point and the power-off time point to the first power supply management unit 242. The first power supply management unit 242 is configured to: control, at the power-on time point, the drive unit 244 and the first direct current maintaining unit 246 to be powered on, control the drive unit 244 and the first direct current maintaining unit 246 to maintain a power-on state, control, at the power-off time point, the drive unit 244 and the first direct current maintaining unit 246 to be powered off, and control the drive unit 244 and the first direct current maintaining unit 246 to maintain a power-off state. The power-on time point is a preset time point before data is sent.

The data transmission cycle may also be referred to as a transmission cycle of the data. For example, the data needs to be transmitted at time points of 1s, 2s, 3s, 4s, ..., 20s, 21s, 22s, and the like. The data transmission cycle is 1s. The data needs to be transmitted at the time points of 1s, 2s, 3s, 4s, ..., 20s, 21s, 22s, and the like, and the data can be transmitted within 0.1. Power-on time points may be time points of 0.8s, 1.8s, 2.8s, 3.8s, ..., 19.8s, 20.8s, 21.8s, and the like. From the time point of 0.8s to a time point of 1.1s, from the time point of 1.8s to a time point of 2.1s, from the time point of 2.8s to a time point of 3.1s, from the time point of 3.8s to a time point of 4.1s, ..., from the time point of 19.8s to a time point of 20.1s, from the time point of 20.8s to a time point of 21.1s, from the time point of 21.8s to a time point of 22.1s, and the like, the drive unit 244 and the first direct current maintaining unit 246 are controlled to maintain a power-on state. Power-off time points may be time points of 1.1s, 2.1s, 3.1s, 4.1s, ..., 20.1s, 21.1s, 22.1s, and the like. From the time point of 0 to the time point of 0.8s, from the time point of 1.1s to the time point of 1.8s, from the time point of 2.1s to the time point of 2.8s, from the time point of 3.1s to the time point of 3.8s, from the time point of 4.1s to a time point of 4.8s, ..., from a time point of 19.1s to the time point of 19.8s, from the time point of 20.1s to the time point of 20.8s, from the time point of 21.1s to the time point of 21.8s, and the like, the drive unit 244 and the first direct current maintaining unit 246 are controlled to maintain a power-off state.

The receiving module 44 further includes a second timing unit 440. An input end of the second timing unit 440 is coupled to the control end of the second control module 42, and an output end of the second timing unit 440 is coupled to the input end of the second power supply management unit 442. The second control module 42 is configured to transmit the data transmission cycle to the second timing unit 440. The second timing unit 440 is configured to: generate the power-on time point and the power-off time point based on the data transmission cycle, and transmit the power-on time point and the power-off time point to the second power supply management unit 442. The second power supply management unit 442 is configured to: control, at the power-on time point, the second direct current maintaining unit 444, the signal detection unit 446, and the receiving unit 448 to be powered on, control the second direct current maintaining unit 444, the signal detection unit 446, and the receiving unit 448 to maintain a power-on state, control, at the power-off time point, the second direct current maintaining unit 444, the signal detection unit 446, and the receiving unit 448 to be powered off, and control the second direct current maintaining unit 444, the signal detection unit 446, and the receiving unit 448 to maintain a power-off state.

After the first control module 22 and the second control module 42 are powered on, the first control module 22 transmits the data transmission cycle to the first timing unit 240. The first timing unit 240 generates the power-on time point and the power-off time point based on the data transmission cycle, and transmits the power-on time point and the power-off time point to the first power supply management unit 242. The second control module 42 transmits the data transmission cycle to the second timing unit 440. The second timing unit 440 generates the power-on time point and the power-off time point based on the data transmission cycle, and transmits the power-on time point and the power-off time point to the second power supply management unit 442. When a current time point is the power-off time point, the first power supply management unit 242 controls the drive unit 244 and the first direct current maintaining unit 246 to be powered off, and controls the drive unit 244 and the first direct current maintaining unit 246 to maintain a power-off state. The second power supply management unit 442 controls the second direct current maintaining unit 444, the signal detection unit 446, and the receiving unit 448 to be powered off, and controls the second direct current maintaining unit 444, the signal detection unit 446, and the receiving unit 448 to maintain a power-off state. The communication circuit enters a low-power mode. When a current time point is the power-on time point, the first power supply management unit 242 controls the drive unit 244 and the first direct current maintaining unit 246 to be powered on, and controls the drive unit 244 and the first direct current maintaining unit 246 to maintain a power-on state, or controls, at the power-on time point, the first direct current maintaining unit 246 to be powered on, and controls, at a preset time point after the power-on time point, the drive unit 244 to be powered on. The second power supply management unit 442 controls the second direct current maintaining unit 444, the signal detection unit 446, and the receiving unit 448 to be powered on, and controls the second direct current maintaining unit 444, the signal detection unit 446, and the receiving unit 448 to maintain a power-on state, or may control, at the power-on time point, the second direct current maintaining unit 444 to be powered on, and control, at the preset time point after the power-on time point, the signal detection unit 446 and the receiving unit 448 to be powered on. After the first direct current maintaining unit 246 is powered on, the direct current voltage between the output end of the drive unit 244 and the first end of the communication line 60 is the first preset voltage. After the second direct current maintaining unit 444 is powered on, the direct current voltage between the second end of the communication line 60 and the input end of the receiving unit 448 is the second preset voltage. The communication circuit exits the low-power mode. The first control module 22 transmits the parallel data to the drive unit 244. The drive unit 244 converts the parallel data into the serial data, and sends the serial data to the communication line 60. The signal detection unit 446 detects that the data is transmitted on the communication line 60. The receiving unit 448 receives the serial data on the communication line 60, and converts the serial data into the parallel data. The receiving unit 448 further transmits the parallel data to the second control module 42.

The power-on time point is the preset time point before the data is sent. As a result, when the first control module 22 needs to send the data, the direct current voltage between the output end of the drive unit 244 and the first end of the communication line 60 can reach the first preset voltage, the direct current voltage between the second end of the communication line 60 and the input end of the receiving unit 448 can reach the second preset voltage, and the receiving unit 448 can receive the data.

When a current time point is the power-off time point, the first power supply management unit 242 may alternatively control the drive unit 244 and the first direct current maintaining unit 246 to be powered on, and control the drive unit 244 and the first direct current maintaining unit 246 to maintain a power-on state. The second power supply management unit 442 may alternatively control the second direct current maintaining unit 444, the signal detection unit 446, and the receiving unit 448 to be powered on, and control the second direct current maintaining unit 444, the signal detection unit 446, and the receiving unit 448 to maintain a power-on state. When a current time point is the power-off time point, the first power supply management unit 242 may alternatively control the drive unit 244 to be powered off, control the drive unit 244 to maintain a power-off state, control the first direct current maintaining unit 246 to be powered on, and control the first direct current maintaining unit 246 to maintain a power-on state. The second power supply management unit 442 may alternatively control the second direct current maintaining unit 444 to be powered on, control the signal detection unit 446 and the receiving unit 448 to be powered off, control the second direct current maintaining unit 444 to be powered on, and control the signal detection unit 446 and the receiving unit 448 to maintain a power-off state.

In another optional embodiment, the power-on time point is used to control the drive unit 244, the signal detection unit 446, and the receiving unit 448 to be powered on. However, at a preset time point before the power-on time point, the first power supply management unit 242 controls the first direct current maintaining unit 246 to be powered on, and the second power supply management unit 442 controls the second direct current maintaining unit 444 to be powered on.

In this embodiment, the first timing unit 240 is disposed in the sending module 24 and the second timing unit 440 is disposed in the receiving module 44. The first timing unit 240 generates the power-on time point and the power-off time point based on the data transmission cycle, and the second timing unit 440 generates the power-on time point and the power-off time point based on the data transmission cycle. When the current time point is the power-on time point, the first power supply management unit 242 controls the drive unit 244 and the first direct current maintaining unit 246 to be powered on, and controls the drive unit 244 and the first direct current maintaining unit 246 to maintain a power-on state, and the second power supply management unit 442 controls the second direct current maintaining unit 444, the signal detection unit 446, and the receiving unit 448 to be powered on, and controls the second direct current maintaining unit 444, the signal detection unit 446, and the receiving unit 448 to maintain a power-on state. In this way, when the first control module 22 needs to send the data, the direct current voltage between the output end of the drive unit 244 and the first end of the communication line 60 can reach the first preset voltage, the direct current voltage between the second end of the communication line 60 and the input end of the receiving unit 448 can reach the second preset voltage, and the receiving unit 448 can receive the data. When the current time point is the power-off time point, the first power supply management unit 242 controls the drive unit 244 and the first direct current maintaining unit 246 to be powered off, and controls the drive unit 244 and the first direct current maintaining unit 246 to maintain a power-off state, and the second power supply management unit 442 controls the second direct current maintaining unit 444, the signal detection unit 446, and the receiving unit 448 to be powered off, and controls the second direct current maintaining unit 444, the signal detection unit 446, and the receiving unit 448 to maintain a power-off state. This can reduce power of the communication circuit.

In another optional embodiment, the first timing unit 240 maintains the data transmission cycle and a link sleep cycle. The data transmission cycle is duration of a data transmission after the data transmission is started each time, for example, 50 ms or 100 ms. The link sleep cycle is duration within which a link is in a sleep state again after the link is started each time, for example, 1s or 2s. This is not limited in this embodiment of the present invention. After the sending apparatus 20 (for example, the first control module 22) obtains the data transmission cycle and the link sleep cycle, the data transmission cycle and the link sleep cycle may be sent to the receiving apparatus 40, and then sent to the second timing unit 440. In this way, the second timing unit 440 controls receiving and sleep of the receiving apparatus 40. Alternatively, the receiving apparatus 40 may determine the data transmission cycle and the link sleep cycle. This is not limited in this embodiment of the present invention.

After the drive unit 244 starts the data transmission, the first timing unit 240 starts timing until timing duration of the first timing unit 240 reaches duration corresponding to the data transmission cycle. In this case, the first timer 240 notifies the first power supply management unit 242, and the first power supply management unit 242 controls the drive unit 244 and the first direct current maintaining unit 246 to be powered off. In this case, the first timing unit 240 may continue timing or restart timing, when timing duration reaches duration corresponding to the link sleep cycle, generate a control signal to control the first direct current maintaining unit 246 to be powered on, and when preset duration after the first direct current maintaining unit 246 is controlled to be powered on elapses, generate a control signal to control the drive unit 244 to be powered on, so as to send the data to the receiving apparatus 40.

On the side of the receiving apparatus 40, the receiving apparatus 40 is powered on by default in an initial phase. When detecting that the data is transmitted on the communication line, the signal detection unit 446 notifies the second timing unit 440. The second timing unit 440 starts timing. When timing duration of the second timing unit 440 exceeds the duration corresponding to the data transmission cycle, the second timing unit 440 sends a control instruction to notify the second power supply management unit 442. The second power supply management unit 442 controls the signal detection unit 446, the second direct current maintaining unit 444, and the receiving unit 448 to be powered off. Then, the second timing unit 440 restarts timing or continues timing. When timing duration is greater than the link sleep duration, the second timing unit 440 generates control signaling to notify the second power supply management unit 442. The second power supply management unit 442 controls the second direct current maintaining unit 444 to be powered on, and at a preset time point after the second direct current maintaining unit 444 is controlled to be powered on, controls the signal detection unit 446 and the receiving unit 448 to be powered on.

Alternatively, after the drive unit 244 starts the data transmission, the first timing unit 240 starts timing until timing duration of the first timing unit 240 reaches duration corresponding to the data transmission cycle. In this case, the first timer 240 notifies the first power supply management unit 242, and the first power supply management unit 242 controls the drive unit 244 to be powered off and the first direct current maintaining unit 246 to maintain a power-on state. In this case, the first timing unit 240 may continue timing or restart timing, and when timing duration reaches duration corresponding to the link sleep cycle, generate a control signal to control the drive unit 244 to be powered on, so as to send the data to the receiving apparatus 40.

On the side of the receiving apparatus 40, when detecting that the data is transmitted on the communication line, the signal detection unit 446 notifies the second timing unit 440. The second timing unit 440 starts timing, and controls the signal detection unit 446, the second direct current maintaining unit 444, and the receiving unit 448 to be powered on. When timing duration of the second timing unit 440 exceeds the duration corresponding to the data transmission cycle, the second timing unit 440 sends a control instruction to notify the second power supply management unit 442. The second power supply management unit 442 controls the signal detection unit 446 and the receiving unit 448 to powered off, and controls the second direct current maintaining unit 444 to maintain a power-on state. Then, the second timing unit 440 restarts timing or continues timing. When timing duration is greater than the link sleep duration, the second timing unit 440 generates control signaling to notify the second power supply management unit 442. The second power supply management unit 442 controls the signal detection unit 446 and the receiving unit 448 to be powered on.

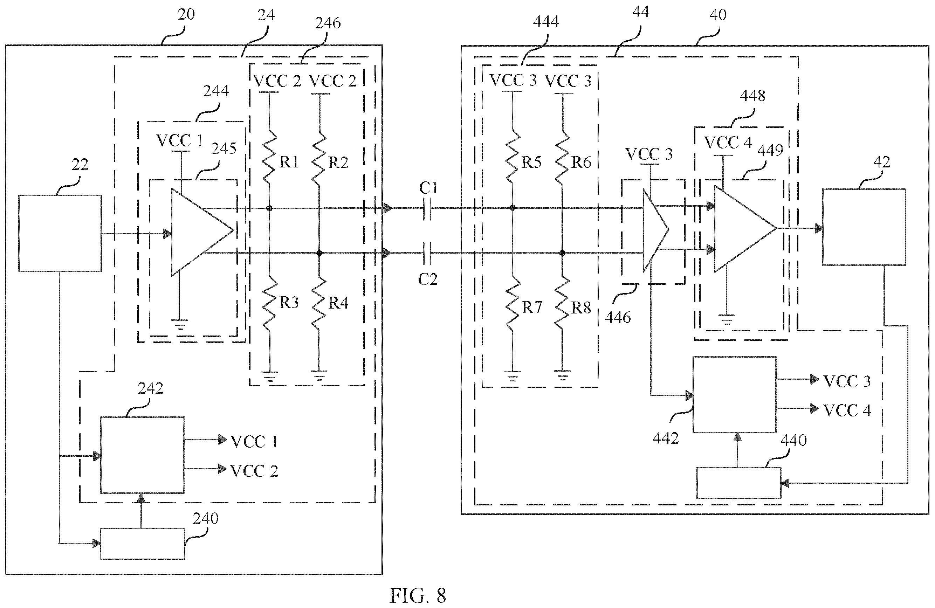

FIG. 8 is a diagram of an optional implementation circuit of the communication circuit in FIG. 7. The drive unit 244 includes a drive circuit 245 and a first power supply VCC 1. An input end of the drive circuit 245 is coupled to the output end of the first control module 22. A first output end of the drive circuit 245 is coupled to a first end of the first capacitor C1. A second output end of the drive circuit 245 is coupled to a first end of the second capacitor C2. The drive circuit 245 is further coupled to the first power supply VCC 1. The input end of the drive circuit 245 is used as the input end of the drive unit 244. The first output end and the second output end of the drive circuit 245 are used as the output end of the drive unit 244. The first direct current maintaining unit 246 includes a first resistor R1, a second resistor R2, a third resistor R3, a fourth resistor R4, and a second power supply VCC 2. A first end of the first resistor R1 is separately coupled to a first end of the third resistor R3 and the first end of the first capacitor C1. A second end of the first resistor R1 is coupled to the second power supply VCC 2. A second end of the third resistor R3 is grounded. A first end of the second resistor R2 is separately coupled to a first end of the fourth resistor R4 and the first end of the second capacitor C2. A second end of the second resistor R2 is coupled to the second power supply VCC 2. A second end of the fourth resistor R4 is grounded.

The second direct current maintaining unit 444 includes a fifth resistor R5, a sixth resistor R6, a seventh resistor R7, an eighth resistor R8, and a third power supply VCC 3. A first end of the fifth resistor R5 is separately coupled to a second end of the first capacitor C1 and a first end of the seventh resistor R7. A second end of the fifth resistor R5 is coupled to the third power supply VCC 3. A second end of the seventh resistor R7 is grounded. A first end of the sixth resistor R6 is separately coupled to a second end of the second capacitor C2 and a first end of the eighth resistor R8. A second end of the sixth resistor R6 is coupled to the third power supply VCC 3. A second end of the eighth resistor R8 is grounded. The third power supply VCC 3 is further coupled to the signal detection unit 446 for power supply to the signal detection unit 446. The receiving unit 448 includes a receiving circuit 449 and a fourth power supply VCC 4. An input end of the receiving circuit 449 is coupled to the second end of the communication line 60. An output end of the receiving circuit 449 is coupled to the second control module 42. The receiving circuit 449 is further coupled to the fourth power supply VCC 4. The input end of the receiving circuit 449 is used as the input end of the receiving unit 448. The output end of the receiving circuit 449 is used as the output end of the receiving unit 448.

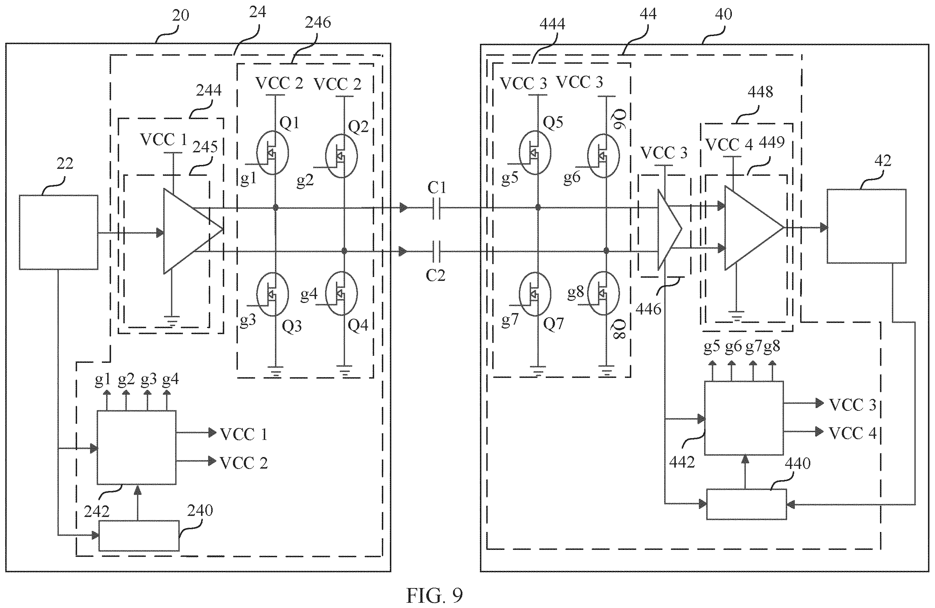

FIG. 9 is a diagram of another optional implementation circuit of the communication circuit in FIG. 7. A difference between FIG. 9 and FIG. 8 is that the first resistor R1, the second resistor R2, the third resistor R3, and the fourth resistor R4 of the first direct current maintaining unit 246 are replaced with a first MOS transistor Q1, a second MOS transistor Q2, a third MOS transistor Q3, and a fourth MOS transistor Q4. A source of the first MOS transistor Q1 is separately coupled to a drain of the third MOS transistor Q3 and the first end of the first capacitor C1. A drain of the first MOS transistor Q1 is coupled to the second power supply VCC 2. A source of the third MOS transistor Q3 is grounded. A source of the second MOS transistor Q2 is separately coupled to a drain of the fourth MOS transistor Q4 and the first end of the second capacitor C2. A drain of the second MOS transistor Q2 is coupled to the second power supply VCC 2. A source of the fourth MOS transistor Q4 is grounded. A gate g1 of the first MOS transistor Q1, a gate g2 of the second MOS transistor Q2, a gate g3 of the third MOS transistor Q3, and a gate g4 of the fourth MOS transistor Q4 are all coupled to the first power supply management unit 242.

The fifth resistor R5, the sixth resistor R6, the seventh resistor R7, and the eighth resistor R8 of the second direct current maintaining unit 444 are replaced with a fifth MOS transistor Q5, a sixth MOS transistor Q6, a seventh MOS transistor Q7, and an eighth MOS transistor Q8. A source of the fifth MOS transistor Q5 is separately coupled to a drain of the seventh MOS transistor Q7 and the second end of the first capacitor C1. A drain of the fifth MOS transistor Q5 is coupled to the third power supply VCC 3. A source of the seventh MOS transistor Q7 is grounded. A source of the sixth MOS transistor Q6 is separately coupled to a drain of the eighth MOS transistor Q8 and the second end of the second capacitor C2. A drain of the sixth MOS transistor Q6 is coupled to the third power supply VCC 3. A source of the eighth MOS transistor Q8 is grounded. A gate g1 of the fifth MOS transistor Q5, a gate g2 of the sixth MOS transistor Q6, a gate g3 of the seventh MOS transistor Q7, and a gate g4 of the eighth MOS transistor Q8 are all coupled to the second power supply management unit 442.

The foregoing communication circuit may be applied to a device that supports a protocol, for example, SerDes, PCIe (peripheral component interconnect express), MIPI (Mobile Industry Processor Interface) C-PHY, MIPI D-PHY, or MIPI M-PHY.

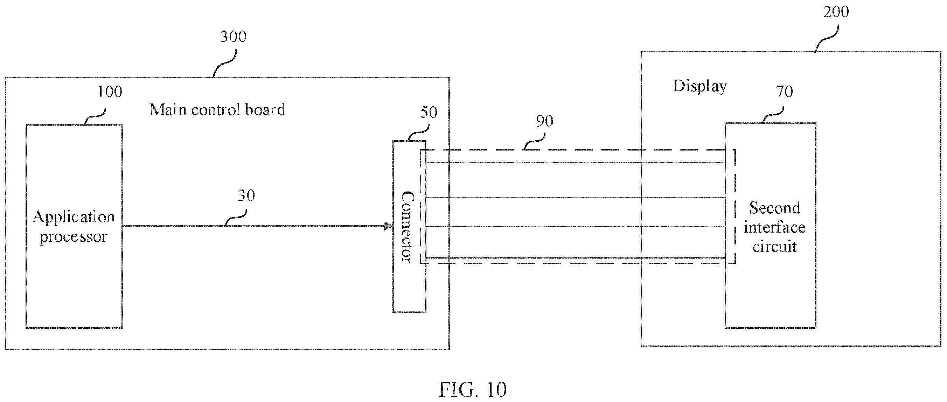

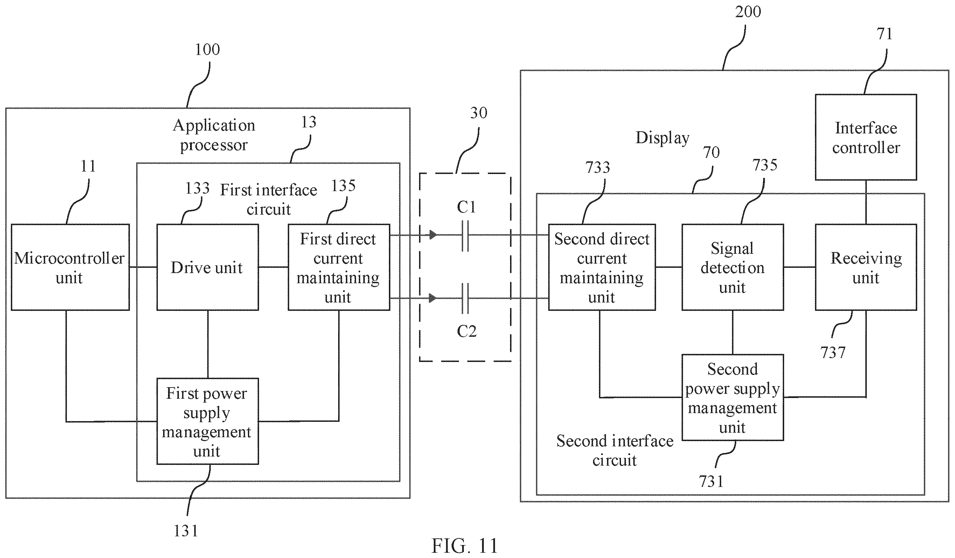

Refer to FIG. 10 and FIG. 11. This application further provides a mobile phone. The mobile phone includes the communication circuit according to any one of the foregoing embodiments. The sending apparatus 20 is an application processor 100 on a main control board 300 of the mobile phone. The first control module 22 is a microcontroller unit 11 in the application processor 100. The sending module 24 is a first interface circuit 13 in the application processor 100. The receiving apparatus 40 is a display 200 of the mobile phone. The second control module 42 is an interface controller 71 of the display 200. The receiving module 44 is a second interface circuit 70 of the display 200. A communication line includes a printed circuit board (Printed Circuit Board, PCB) 30 disposed on the main control board 300 of the mobile phone and a flexible printed circuit (Flexible Printed Circuit, FPC) that couples the main control board 300 of the mobile phone and the display 200. The first capacitor C1 and the second capacitor C2 are disposed on the PCB 30. One end of the FPC 90 is coupled to the PCB 30 by using a coupler 50, and the other end is coupled to the second interface circuit 70.

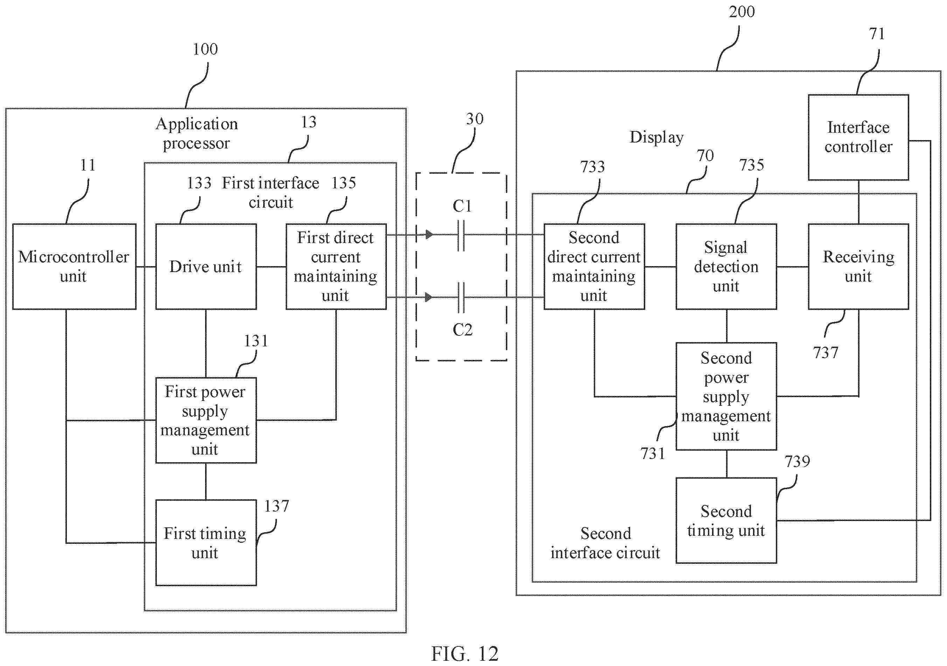

Refer to FIG. 12. This application further provides another mobile phone. The mobile phone includes the communication circuit according to any one of the foregoing embodiments. The application processor 100 periodically sends data to the display 200. Different from that in FIG. 10, the sending module 13 further includes a first timing unit 137. The receiving module 70 further includes a second timing unit 739.

After the mobile phone is powered on, the microcontroller unit 11 of the mobile phone and the interface controller 71 of the display 200 are powered on and started. The microcontroller unit 11 generates a data transmission cycle, and transmits the data transmission cycle to the first timing unit 137. The interface controller 71 transmits the data transmission cycle to the second timing unit 739. The second timing unit 739 generates a power-on time point and a power-off time point based on the data transmission cycle, and transmits the power-on time point and the power-off time point to a second power supply management unit 731.

When a current time point is the power-on time point, a first power supply management unit 131 controls a drive unit 133 and a first direct current maintaining unit 135 to be powered on, and controls the drive unit 133 and the first direct current maintaining unit 135 to maintain a power-on state. The second power supply management unit 731 controls a second direct current maintaining unit 733, a signal detection unit 735, and a receiving unit 737 to be powered on, and controls the second direct current maintaining unit 733, the signal detection unit 735, and the receiving unit 737 to maintain a power-on state. The microcontroller unit 11 transmits parallel data to the drive unit 133. The drive unit 133 converts the parallel data into serial data, and sends the serial data to the communication line 60. The signal detection unit 735 detects that the data is transmitted on the communication line. The receiving unit 737 receives the serial data on the communication line, and converts the serial data into the parallel data. The receiving unit 737 further transmits the parallel data to the interface controller 71. The interface controller 71 transmits the received parallel data to a display panel by using a time sequence controller, and the display panel displays the parallel data.

When a current time point is the power-off time point, a first power supply management unit 131 controls a drive unit 133 and a first direct current maintaining unit 135 to be powered off, and controls the drive unit 133 and the first direct current maintaining unit 135 to maintain a power-off state. The second power supply management unit 731 controls a second direct current maintaining unit 733, a signal detection unit 735, and a receiving unit 737 to be powered off, and controls the second direct current maintaining unit 733, the signal detection unit 735, and the receiving unit 737 to maintain a power-off state. The mobile phone enters a low-power mode.

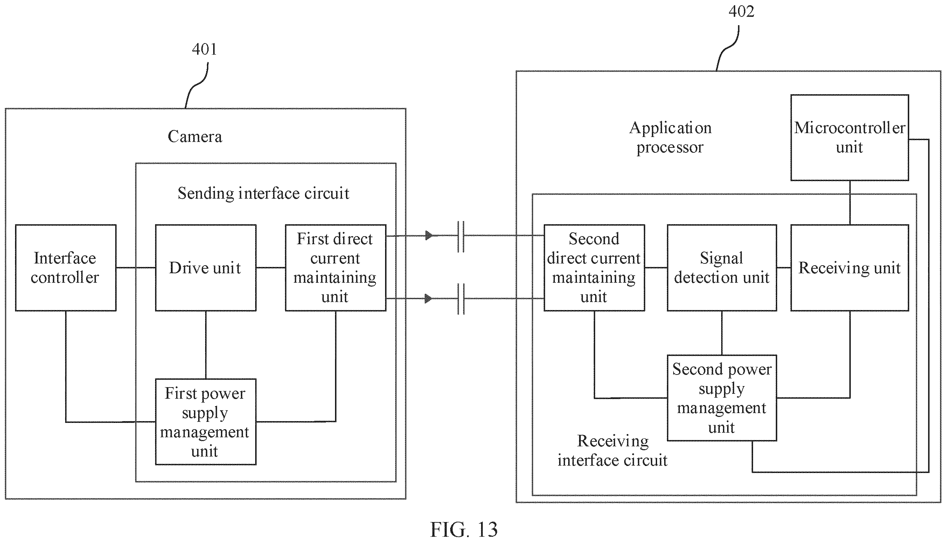

Refer to FIG. 13. The sending apparatus 20 in this application may alternatively be a camera 401 in a mobile phone. The first control module 22 is an interface controller in the camera 401. The sending module 24 is a sending interface circuit in the camera 401. The receiving apparatus 40 is an application processor 402 in the mobile phone. The second control module 42 is a microcontroller unit in the application processor 402. The receiving module 44 is a receiving interface circuit in the application processor 402. The microcontroller unit in the application processor 402 is configured to detect whether an application on the mobile phone needs to obtain data in the camera 401. When the microcontroller unit in the application processor 402 detects a request that the application on the mobile phone needs to obtain the data in the camera 401, the microcontroller unit in the application processor 402 transmits a data sending request to the interface controller in the camera 401 through another communication circuit (which is not the communication circuit shown in the figure). The data sending request is used to control the interface controller in the camera 401 to send the data. The interface controller in the camera 401 obtains to-be-sent data from a storage apparatus, and sends the to-be-sent data to the receiving interface circuit in the application processor 402 through the sending interface circuit in the camera 401. The microcontroller unit in the application processor 402 obtains the data received by the receiving interface circuit in the application processor 402. When the microcontroller unit in the application processor 402 does not detect a request that the application on the mobile phone needs to obtain the data in the camera 401, the microcontroller unit in the application processor 402 transmits a sending stop request to the interface controller in the camera 401. The interface controller in the camera 401 stops sending the data to the microcontroller unit in the application processor 402.

Alternatively, the sending apparatus 20 in this application may be an application processor in a mobile phone, the first control module 22 is a microcontroller unit of the application processor, the sending module 24 is a first sending interface circuit of the application processor, the receiving apparatus 40 is a storage apparatus in the mobile phone, the second control module 42 is an interface controller in the storage apparatus, and the receiving module 44 is a first receiving interface circuit in the storage apparatus; and/or the sending apparatus 20 may be a storage apparatus in a mobile phone, the first control module 22 is an interface controller of the storage apparatus, the sending module 24 is a second sending interface circuit of the storage apparatus, the receiving apparatus 40 is an application processor in the mobile phone, the second control module 42 is a microcontroller unit in the application processor, and the receiving module 44 is a second receiving interface circuit in the application processor. The first sending interface circuit of the application processor sends data to the first receiving interface circuit in the storage apparatus. The second sending interface circuit of the storage apparatus sends data to the second receiving interface circuit in the application processor.

The communication circuit in this application may alternatively be applied to two independent electronic devices. The sending apparatus 20 may be an application processor of a mobile phone. The receiving apparatus 40 may be an external display independent of the mobile phone. The application processor of the mobile phone is coupled to the external display through a communication line. The coupling capacitor may be located on a communication line of the external display, or may be located on a communication line of the mobile phone.

Alternatively, the sending apparatus 20 may be a desktop computer, and the receiving apparatus 40 may be a memory card. The desktop computer is coupled to the memory card through a communication line. Alternatively, the sending apparatus 20 may be a tablet computer, and the receiving apparatus 40 may be a camera. The tablet computer is coupled to the camera through a communication line. Alternatively, the sending apparatus 20 may be a desktop computer, and the receiving apparatus 40 may be a Wi-Fi device. The desktop computer is coupled to the Wi-Fi device through a communication line. The communication circuit in this application may alternatively be applied to another electronic device.

Technical features of the foregoing embodiments may be combined randomly. For brevity of description, not all possible combinations of the technical features in the foregoing embodiments are described. However, as long as the combination of the technical features does not have a conflict, it should be considered that the combination falls within the scope of the disclosure of this specification.

The foregoing embodiments merely show several implementations of the present invention, are described specifically and in detail, but shall not be understood as a limitation on the scope of the patent of the present invention. It should be noted that a person of ordinary skill in the art may make some improvements and polishing without departing from the idea of the present invention and the improvements and polishing shall fall within the protection scope of the present invention. Therefore, the protection scope of the patent of the present invention shall be subject to the following claims.

Claims

1. A communication circuit, comprising a sending apparatus, a communication line, and a receiving apparatus, wherein the sending apparatus is connected to the receiving apparatus through the communication line, the communication line is configured to transmit data between the sending apparatus and the receiving apparatus, a coupling capacitor is disposed on the communication line, the sending apparatus comprises a first power supply management unit and a first direct current maintaining unit, the first power supply management unit is coupled to the first direct current maintaining unit, and the first direct current maintaining unit is coupled to a first end of the communication line; the receiving apparatus comprises a second power supply management unit and a second direct current maintaining unit; and the second power supply management unit is coupled to the second direct current maintaining unit, and the second direct current maintaining unit is coupled to a second end of the communication line;

the first power supply management unit is configured to: control the first direct current maintaining unit to be powered on, and control the first direct current maintaining unit to maintain a power-on state; the first direct current maintaining unit is configured to maintain a direct current voltage at the first end of the communication line as a first preset voltage;

the second power supply management unit is configured to: control the second direct current maintaining unit to be powered on, and control the second direct current maintaining unit to maintain a power-on state; and the second direct current maintaining unit is configured to maintain a direct current voltage at the second end of the communication line as a second preset voltage.

2. The communication circuit according to claim 1, wherein the coupling capacitor disposed on the communication line comprises a first capacitor and a second capacitor, the communication line comprises a first signal cable and a second signal cable, the first capacitor is disposed on the first signal cable, and the second capacitor is disposed on the second signal cable; and the first direct current maintaining unit comprises a first resistor, a second resistor, a third resistor, a fourth resistor, and a second power supply, a first end of the first resistor is separately coupled to a first end of the third resistor and a first end of the first signal cable, a second end of the first resistor is coupled to the second power supply, a second end of the third resistor is grounded, a first end of the second resistor is separately coupled to a first end of the fourth resistor and a first end of the second signal cable, a second end of the second resistor is coupled to the second power supply, and a second end of the fourth resistor is grounded, wherein

$$0.95 \leq \frac{r3*(r2+r4)}{r4*(r1+r3)} \leq 1.05$$

, wherein r1 is a resistance value of the first resistor, r2 is a resistance value of the second resistor, r3 is a resistance value of the third resistor, and r4 is a resistance value of the fourth resistor; the second direct current maintaining unit comprises a fifth resistor, a sixth resistor, a seventh resistor, an eighth resistor, and a third power supply, a first end of the fifth resistor is separately coupled to a second end of the first signal cable and a first end of the seventh resistor, a second end of the fifth resistor is coupled to the third power supply, a second end of the seventh resistor is grounded, a first end of the sixth resistor is separately coupled to a second end of the second signal cable and a first end of the eighth resistor, a second end of the sixth resistor is coupled to the third power supply, and a second end of the eighth resistor is grounded, wherein

$$0.95 \leq \frac{r5*(r6+r8)}{r6*(r5+r7)} \leq 1.05$$

, wherein r5 is a resistance value of the fifth resistor, r6 is a resistance value of the sixth resistor, r7 is a resistance value of the seventh resistor, and r8 is a resistance value of the eighth resistor; and the first end of the first signal cable and the first end of the second signal cable are used as the first end of the communication line, and the second end of the first signal cable and the second end of the second signal cable are used as the second end of the communication line.

3. The communication circuit according to claim 1, wherein the coupling capacitor disposed on the communication line comprises a first capacitor and a second capacitor, the first capacitor is disposed on a first signal cable, the second capacitor is disposed on a second signal cable, the communication line comprises the first signal cable and the second signal cable, the first direct current maintaining unit comprises a first MOS transistor, a second MOS transistor, a third MOS transistor, and a fourth MOS transistor, a source of the first MOS transistor is separately coupled to a drain of the third MOS transistor and a first end of the first signal cable, a drain of the first MOS transistor is coupled to a second power supply, a source of the third MOS transistor is grounded, a source of the second MOS transistor is separately coupled to a drain of the fourth MOS transistor and a first end of the second signal cable, a drain of the second MOS transistor is coupled to the second power supply, a source of the fourth MOS transistor is grounded, and a gate of the first MOS transistor, a gate of the second MOS transistor, a gate of the third MOS transistor, and a gate of the fourth MOS transistor are all coupled to the first power supply management unit, wherein

$$0.95 \leq \frac{r3'*(r2'+r4')}{r4'*(r1'+r3')} \leq 1.05$$

, wherein r1' is an equivalent resistance value between the source and the drain of the first MOS transistor, r2' is an equivalent resistance value between the source and the drain of the second MOS transistor, r3' is an equivalent resistance value between the source and the drain of the third MOS transistor, and r4' is an equivalent resistance value between the source and the drain of the fourth MOS transistor; the second direct current maintaining unit comprises a fifth MOS transistor, a sixth MOS transistor, a seventh MOS transistor, and an eighth MOS transistor, a source of the fifth MOS transistor is separately coupled to a drain of the seventh MOS transistor and a second end of the first signal cable, a drain of the fifth MOS transistor is coupled to a third power supply, a source of the seventh MOS transistor is grounded, a source of the sixth MOS transistor is separately coupled to a drain of the eighth MOS transistor and a second end of the second signal cable, a drain of the sixth MOS transistor is coupled to the third power supply, a source of the eighth MOS transistor is grounded, and a gate of the fifth MOS transistor, a gate of the sixth MOS transistor, a gate of the seventh MOS transistor, and a gate of the eighth MOS transistor are all coupled to the second power supply management unit, wherein

$$0.95 \le \frac{r5'*(r6'+r8')}{r6'*(r5'+r7')} \le 1.05$$ , wherein r5' is an equivalent resistance value between the source and the drain of the fifth MOS transistor, r6' is an equivalent resistance value between the source and the drain of the sixth MOS transistor, r7' is an equivalent resistance value between the source and the drain of the seventh MOS transistor, and r8' is an equivalent resistance value between the source and the drain of the eighth MOS transistor; and

the first end of the first signal cable and the first end of the second signal cable are used as the first end of the communication line, and the second end of the first signal cable and the second end of the second signal cable are used as the second end of the communication line.

4. The communication circuit according to claim 1, wherein the sending apparatus further comprises a first control module and a drive unit, the first control module is coupled to the first power supply management unit, and the drive unit is separately coupled to the first control module, the first power supply management unit, and the first end of the communication line;

the first control module is further configured to: receive a data sending request, and transmit a third control signal to the first power supply management unit and transmit parallel data to the drive unit based on the data sending request;

the first power supply management unit is further configured to control, based on the third control signal, the drive unit to be powered on;

the drive unit is configured to: convert the parallel data into serial data, and send the serial data to the communication line;

the first control module is further configured to: receive a sending stop request, and transmit a fifth control signal to the first power supply management unit based on the sending stop request; and

the first power supply management unit is further configured to control, based on the fifth control signal, the drive unit to be powered off.

5. The communication circuit according to claim 1, wherein the receiving apparatus further comprises a signal detection unit and a receiving unit, the receiving unit is coupled to the second end of the communication line, the signal detection unit is coupled between the second end of the communication line and the receiving unit, and the receiving unit and the signal detection unit are further coupled to the second power supply management unit;

the receiving unit is configured to: receive serial data on the communication line, and convert the serial data into parallel data;

the second power supply management unit is further configured to control, based on a second control signal, the signal detection unit to be powered on;

the signal detection unit is configured to detect whether data is transmitted on the communication line, and when the signal detection unit detects that the data is transmitted on the communication line, the signal detection unit transmits a fourth control signal to the second power supply management unit; and

the second power supply management unit controls, based on the fourth control signal, the receiving unit to be powered on and the receiving unit to maintain a power-on state; or

when the signal detection unit detects that no data is transmitted on the communication line, the signal detection unit transmits a sixth control signal to the second power supply management unit, and the second power supply management unit controls, based on the sixth control signal, the receiving unit to be powered off

6. A communication circuit, comprising a sending apparatus, a communication line, and a receiving apparatus, wherein the sending apparatus is connected to the receiving apparatus through the communication line, the communication line is configured to transmit data between the sending apparatus and the receiving apparatus, a coupling capacitor is disposed on the communication line, the sending apparatus comprises a first timing unit, a first power supply management unit, and a first direct current maintaining unit, the first power supply management unit is separately coupled to the first timing unit and the first direct current maintaining unit, and the first direct current maintaining unit is coupled to a first end of the communication line; and the receiving apparatus comprises a second timing unit, a second power supply management unit, and a second direct current maintaining unit, the second power supply management unit is separately coupled to the second timing unit and the second direct current maintaining unit, and the second direct current maintaining unit is coupled to a second end of the communication line;

the first timing unit is configured to: generate a power-on time point and a power-off time point, and transmit the power-on time point and the power-off time point to the first power supply management unit;

the first power supply management unit is configured to control, at the power-on time point, the first direct current maintaining unit to be powered on, wherein a preset time point after the power-on time point is a data sending time point;

the first power supply management unit is further configured to control, at the power-off time point, the first direct current maintaining unit to be powered off;

the first direct current maintaining unit is configured to maintain a direct current voltage at the first end of the communication line as a first preset voltage;

the second timing unit is configured to: generate a power-on time point and a power-off time point, and transmit the power-on time point and the power-off time point to the second power supply management unit;

the second power supply management unit is configured to control, at the power-on time point, the second direct current maintaining unit to be powered on, wherein a preset time point after the power-on time point is a data sending time point;

the second power supply management unit is further configured to control, at the power-off time point, the second direct current maintaining unit to be powered off; and

the second direct current maintaining unit is configured to maintain a direct current voltage at the second end of the communication line as a second preset voltage.

7. The communication circuit according to claim 6, wherein the coupling capacitor disposed on the communication line comprises a first capacitor and a second capacitor, the communication line comprises a first signal cable and a second signal cable, the first capacitor is disposed on the first signal cable, and the second capacitor is disposed on the second signal cable; and the first direct current maintaining unit comprises a first resistor, a second resistor, a third resistor, a fourth resistor, and a second power supply, a first end of the first resistor is separately coupled to a first end of the third resistor and a first end of the first signal cable, a second end of the first resistor is coupled to the second power supply, a second end of the third resistor is grounded, a first end of the second resistor is separately coupled to a first end of the fourth resistor and a first end of the second signal cable, a second end of the second resistor is coupled to the second power supply, and a second end of the fourth resistor is grounded, wherein

$$0.95 \leq \frac{r3*(r2+r4)}{r4*(r1+r3)} \leq 1.05$$, wherein r1 is a resistance value of the first resistor, r2 is a resistance value of the second resistor, r3 is a resistance value of the third resistor, and r4 is a resistance value of the fourth resistor; the second direct current maintaining unit comprises a fifth resistor, a sixth resistor, a seventh resistor, an eighth resistor, and a third power supply, a first end of the fifth resistor is separately coupled to a second end of the first signal cable and a first end of the seventh resistor, a second end of the fifth resistor is coupled to the third power supply, a second end of the seventh resistor is grounded, a first end of the sixth resistor is separately coupled to a second end of the second signal cable and a first end of the eighth resistor, a second end of the sixth resistor is coupled to the third power supply, and a second end of the eighth resistor is grounded, wherein

$$0.95 \leq \frac{r5*(r6+r8)}{r6*(r5+r7)} \leq 1.05$$, wherein r5 is a resistance value of the fifth resistor, r6 is a resistance value of the sixth resistor, r7 is a resistance value of the seventh resistor, and r8 is a resistance value of the eighth resistor; and

the first end of the first signal cable and the first end of the second signal cable are used as the first end of the communication line, and the second end of the first signal cable and the second end of the second signal cable are used as the second end of the communication line.

8. The communication circuit according to claim 6, wherein the coupling capacitor disposed on the communication line comprises a first capacitor and a second capacitor, the first capacitor is disposed on a first signal cable, the second capacitor is disposed on a second signal cable, the communication line comprises the first signal cable and the second signal cable, the first direct current maintaining unit comprises a first MOS transistor, a second MOS transistor, a third MOS transistor, and a fourth MOS transistor, a source of the first MOS transistor is separately coupled to a drain of the third MOS transistor and a first end of the first signal cable, a drain of the first MOS transistor is coupled to a second power supply, a source of the third MOS transistor is grounded, a source of the second MOS transistor is separately coupled to a drain of the fourth MOS transistor and a first end of the second signal cable, a drain of the second MOS transistor is coupled to the second power supply, a source of the fourth MOS transistor is grounded, and a gate of the first MOS transistor, a gate of the second MOS transistor, a gate of the third MOS transistor, and a gate of the fourth MOS transistor are all coupled to the first power supply management unit, wherein

$$0.95 \leq \frac{r3'*(r2'+r4')}{r4'*(r1'+r3')} \leq 1.05$$

, wherein r1' is an equivalent resistance value between the source and the drain of the first MOS transistor, r2' is an equivalent resistance value between the source and the drain of the second MOS transistor, r3' is an equivalent resistance value between the source and the drain of the third MOS transistor, and r4' is an equivalent resistance value between the source and the drain of the fourth MOS transistor; the second direct current maintaining unit comprises a fifth MOS transistor, a sixth MOS transistor, a seventh MOS transistor, and an eighth MOS transistor, a source of the fifth MOS transistor is separately coupled to a drain of the seventh MOS transistor and a second end of the first signal cable, a drain of the fifth MOS transistor is coupled to a third power supply, a source of the seventh MOS transistor is grounded, a source of the sixth MOS transistor is separately coupled to a drain of the eighth MOS transistor and a second end of the second signal cable, a drain of the sixth MOS transistor is coupled to the third power supply, a source of the eighth MOS transistor is grounded, and a gate of the fifth MOS transistor, a gate of the sixth MOS transistor, a gate of the seventh MOS transistor, and a gate of the eighth MOS transistor are all coupled to the second power supply management unit, wherein

$$0.95 \leq \frac{r5'*(r6'+r8')}{r6'*(r5'+r7')} \leq 1.05$$

, wherein r5' is an equivalent resistance value between the source and the drain of the fifth MOS transistor, r6' is an equivalent resistance value between the source and the drain of the sixth MOS transistor, r7' is an equivalent resistance value between the source and the drain of the seventh MOS transistor, and r8' is an equivalent resistance value between the source and the drain of the eighth MOS transistor; and
the first end of the first signal cable and the first end of the second signal cable are used as the first end of the communication line, and the second end of the first signal cable and the second end of the second signal cable are used as the second end of the communication line.

9. The communication circuit according to claim 6, wherein the sending apparatus further comprises a first control module and a drive unit, the first control module is separately coupled to the drive unit and the first timing unit, and the drive unit is separately coupled to the first power supply management unit and the first end of the communication line;

the first control module is configured to: transmit a data transmission cycle and a link sleep cycle to the first timing unit, and transmit parallel data to the drive unit, wherein the data transmission cycle is transmission duration of each data transmission, and the link sleep cycle is a time interval between every two data transmissions;
the first timing unit is configured to determine the power-on time point and the power-off time point based on the data transmission cycle and the link sleep time;
the first power supply management unit is further configured to control, at the preset time point after the power-on time point, the drive unit to be powered on;
the drive unit is configured to: convert the parallel data into serial data, and send the serial data to the communication line; and
the first power supply management unit is further configured to control, at the power-off time point, the drive unit to be powered off.

10. The communication circuit according to claim 6, wherein the receiving apparatus further comprises a second control module, a signal detection unit, and a receiving unit, the second control module is coupled to the second timing unit, the receiving unit is coupled to the second end of the communication line, the signal detection unit is coupled between the second end of the communication line and the receiving unit, and the receiving unit and the signal detection unit are further coupled to the second power supply management unit;

the second control module is configured to: transmit a data transmission cycle and a link sleep cycle to the second timing unit, and transmit parallel data to the receiving unit, wherein the data transmission cycle is transmission duration of each data transmission, and the link sleep cycle is a time interval between every two data transmissions;
the second timing unit is configured to determine the power-on time point and the power-off time point based on the data transmission cycle and the link sleep time;
the second power supply management unit is configured to control, at the preset time point after the power-on time point, the signal detection unit and the receiving unit to be powered on;

the signal detection unit is configured to detect whether data is transmitted on the communication line;
the receiving unit is configured to: receive serial data on the communication line, and convert the serial data into parallel data; and
the second power supply management unit is configured to control, at the power-off time point, the signal detection unit and the receiving unit to be powered off.

11. An electronic device, comprising the communication circuit according to any one of claims 1 to 10.

Sending apparatus

| First control module | Sending module |

Receiving apparatus

| Receiving module | Second control module |

FIG. 1a

Sending apparatus

| First control module | Sending module |

Receiving apparatus

| Receiving module | Second control module |

FIG. 1b

Data sending time point

Data sending time point

Expected data transmission

| Data packet 1 | | Data packet 2 |

Low-power interval

Actual data sending time point

Data transmission in an AC coupling manner

| Data packet 1 | | Capacitor charging duration | Data packet 2 |

Low-power interval

Data transmission in the AC coupling manner

| Data packet 1 | Invalid data | Data packet 2 |

FIG. 2

FIG. 3

FIG. 4

FIG. 5

FIG. 6

FIG. 7

FIG. 8

FIG. 9

EP 4 258 123 A1

FIG. 10

FIG. 11

FIG. 12

FIG. 13

## INTERNATIONAL SEARCH REPORT

| International application No. |
|---|
| **PCT/CN2021/140043** |

**A. CLASSIFICATION OF SUBJECT MATTER**

G06F 13/38(2006.01)i

According to International Patent Classification (IPC) or to both national classification and IPC

**B. FIELDS SEARCHED**

Minimum documentation searched (classification system followed by classification symbols)

G06F, H04B, H03K, HO2M

Documentation searched other than minimum documentation to the extent that such documents are included in the fields searched

Electronic data base consulted during the international search (name of data base and, where practicable, search terms used)

CNTXT, CNPAT, WPI, EPODOC: 发送, 接收, 电源, 电压, 直流, 保持, 上电, 下电, 控制, 定时, 预设, 阈值, 串行, 串并转换, serdes, transmit, receive, power, voltage, keep, electrify, off, control, time, threshold, series, parallel

**C. DOCUMENTS CONSIDERED TO BE RELEVANT**

| Category* | Citation of document, with indication, where appropriate, of the relevant passages | Relevant to claim No. |
|---|---|---|
| A | CN 106330357 A (SANECHIPS TECHNOLOGY CO., LTD.) 11 January 2017 (2017-01-11) description, paragraphs [0050]-[0087] | 1-11 |
| A | CN 106502361 A (CENTEC NETWORKS (SUZHOU) CO., LTD.) 15 March 2017 (2017-03-15) entire document | 1-11 |
| A | US 5374861 A (UNISYS CORPORATION) 20 December 1994 (1994-12-20) entire document | 1-11 |
| A | CN 110535342 A (PROWARE TECHNOLOGIES CO., LTD.) 03 December 2019 (2019-12-03) entire document | 1-11 |
| A | WO 2018127054 A1 (SHANGHAI NIO AUTOMOBILE CO., LTD.) 12 July 2018 (2018-07-12) entire document | 1-11 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 February 2022** | **01 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT | International application No. |
|---|---|
| Information on patent family members | **PCT/CN2021/140043** |

| Patent document cited in search report | | | Publication date (day/month/year) | Patent family member(s) | | | Publication date (day/month/year) |
|---|---|---|---|---|---|---|---|
| CN | 106330357 | A | 11 January 2017 | WO | 2017000737 | A1 | 05 January 2017 |
| | | | | US | 2018138922 | A1 | 17 May 2018 |
| | | | | EP | 3319249 | A1 | 09 May 2018 |
| CN | 106502361 | A | 15 March 2017 | None | | | |
| US | 5374861 | A | 20 December 1994 | None | | | |
| CN | 110535342 | A | 03 December 2019 | None | | | |
| WO | 2018127054 | A1 | 12 July 2018 | CN | 107070231 | A | 18 August 2017 |

Form PCT/ISA/210 (patent family annex) (January 2015)